# EUROPEAN PATENT SPECIFICATION

(11) **EP 4 514 878 B1**
(45) Date of publication and mention of the grant of the patent: **04.03.2026**
(21) Application number: 23721346.7
(22) Date of filing: 20.04.2023
(51) Int. Cl.: C08G 64/06, C08G 64/30

(54) **AMORPHOUS COPOLYCARBONATE WITH PHENOLIC BUILDING BLOCKS**
AMORPHES COPOLYCARBONAT MIT PHENOLBAUSTEINEN
COPOLYCARBONATE AMORPHE AVEC BLOCS DE CONSTRUCTION PHÉNOLIQUES

(30) Priority: 27.04.2022 EP 22170239
(43) Date of publication of application: 05.03.2025
(73) Proprietor: Covestro Deutschland AG, 51373 Leverkusen (DE)
(72) Inventor: GARSKA, Bernd, 51103 Köln (DE); BERTIN, Annabelle, 2020 Antwerpen (BE); HEIJL, Jan, 9940 Evergem (BE); MEINE, Niklas, 40223 Düsseldorf (DE)
(74) Representative: Levpat
(86) International application number: PCT/EP2023/060297
(87) International publication number: WO 2023/208725

(56) References cited:
- WO-A2-2015/168225
- US-B2- 8 247 619
- S.-F. KOELEWIJN ET AL: "Sustainable bisphenols from renewable softwood lignin feedstock for polycarbonates and cyanate ester resins", GREEN CHEMISTRY, vol. 19, no. 11, 1 January 2017 (2017-01-01), GB, pages 2561 - 2570, XP055590697, ISSN: 1463-9262, DOI: 10.1039/C7GC00776K

## Description

The present invention relates to an amorphous copolycarbonate comprising specific phenolic building blocks and at least one other aliphatic or aromatic building block different from the first one, a molding compound comprising said copolycarbonate, a molded article comprising said copolycarbonate and a process for preparing an amorphous copolycarbonate comprising specific phenolic building blocks and at least one other aliphatic or aromatic building block different from the first one.

Polycarbonates, especially aromatic polycarbonates, are known to exhibit a good property profile with respect to mechanical and optical properties, heat resistance and weatherability. Due to this property profile they are used in various indoor and outdoor applications. Typically polycarbonates are prepared by the interphase phosgenation process or the melt transesterification method.

Lignocellulosic biomass has been acknowledged for potential use to produce chemicals and biomaterials. It comprises cellulose, hemicellulose and lignin. Lignin is a highly cross-linked macromolecule composed of different types of substituted phenols. Respective processing of lignin can provide various bisphenols and as such lignin promises to be a potential substitute for petrochemically used compounds, but based on natural and renewable sources at affordable costs.

Some studies have been already performed focusing on the provision of bisphenols from lignin. For example, WO2019/002503A1 describes a process for producing ortho alkoxy bisphenols which may be used as starting products for the preparation of biopolymers. This document mentions the reaction of those bisphenol compounds with phosgene or diaryl carbonates to a polycarbonate. However, in the experimental part no such reaction has been conducted.

WO2018/134427 A1 relates to the production of highly pure meta,meta-coupled bis(4-alkylphenol) derivatives from lignin derived sources. The resulting bisphenols are said to be useful monomers for the production of polycarbonates using inter alia phosgene or diphenyl carbonate. However, also in this document no polycarbonate is prepared.

In CN105461912 A the reaction of specific bisphenols with triphosgene is described.

WO2015/183892A1 describes the synthesis of new reactive functionalized phenolic building blocks. In example 46 the synthesis of bisguaiacol polycarbonates is described. Bisguaiacol F is reacted with nitrochloroformate in acetonitrile.

WO2015/168225A2 describes the reaction of alkoxy bisphenols to polycarbonates by interphase phosgenation. In example 5 of this document a polycarbonate based on 4,4'-(2,2'-isopropylidene-bis(o-methoxy)phenol (PBMP) is prepared using the interphase phosgenation and p-cumylphenol as endcapping agent. This document mentions the copolymerization of alkoxy bisphenols with additional monomers that exhibit a half maximal inhibitory concentration (IC₅₀) of less than 0.00025M for alpha or beta in vitro estradiol receptors.

From the prior art as cited above, it can be seen that the skilled person knows how to prepare specific bisphenols from lignin. In the examples of those documents clear instructions as to the fact how to prepare these bisphenols can be found. Those examples are incorporated herein by reference for the sake of the provision of the bisphenols from lignin. Especially, Green Chem., 2017, 19, 2561-2570 shows how to prepare 5,5'-methylenebis(4-n-propylguaiacol), 5,5'-methylenebis(4-ethylguaiacol) and 5,5'-methylenebis(4-methylguaiacol).

Moreover, in this paper polycarbonates are prepared using triphosgene via a standard lab scale procedure. It is reported that the polycarbonate obtained from m,m'-bis(4-methylguaiacol) was highly crystalline and quasi-insoluble despite the favorable thermal properties. It was only soluble in hexafluoroisopropanol. In contrast to this commercial bisphenol A based polycarbonate is amorphous and well known for its optical transparency. To combat the tendency for crystallization, the structure of the bisphenol from lignin was changed, in order to inhibit alignment and promote the required disorder and entanglement of the polycarbonate chains. It was found that indeed polycarbonate from m,m'-bis(4-ethylguaiacol) exhibits a lower tendency to crystallize than the respective methyl-bisphenol and that m,m'-bis(4-n-propylguaiacol) has even a low tendency to crystallize. Moreover, solubility in CHCl₃, DCM and THF also improved. However, with increasing alkyl chain length the glass transition temperature decreased and still for all cases a melting temperature was measurable indicating that although the tendency of crystallization was decreased, the resulting polycarbonate still is semi-crystalline. Moreover, for the polycarbonate based on m,m'-bis(4-n-propylguaiacol) and m,m'-bis(4-ethylguaiacol) a bimodal molecular weight distribution was reported. This might indicate that still a lot of oligomeric structures are present in the resulting polycarbonate. It can be seen that the specific meta,meta-bisphenols do not exhibit a high reactivity in polymerization.

Commercial amorphous bisphenol A based polycarbonate is typically used for obtaining molded articles by extrusion or injection molding. For both processes the fact that the polycarbonate is amorphous is beneficial, because no crystallization shrinkage needs to be considered. The term "crystallization shrinkage" is known to the skilled person. Preferably, it refers to the fact that upon cooling a polymer melt the formation of crystals leads to a post-molding shrinkage. This can be avoided if the polymer is amorphous. It is possible to use crystalline polymers also for extrusion or injection molding processes, however, the crystallization shrinkage needs to be considered for the final shape and volume of the molded article. Thus, crystalline polymers cannot simply be used in standard processes which are designed for amorphous polymers such as bisphenol A based polycarbonate. However, as it is state of the art to use amorphous polymers in such processes, a simple replacement of bisphenol A based polycarbonate by a crystalline polycarbonate based on bisphenols from lignin is not possible.

Based on this prior art, there is a need to provide and prepare a polycarbonate at least partially based on natural and renewable resources. Moreover, there is a need to provide such a polycarbonate which is amorphous and/or soluble in common solvents. Additionally, it would be favorable to prepare such a polycarbonate in industrial scale. Still additionally, this polycarbonate should exhibit comparable properties (e. g. with respect to solubility, processing, mechanical and optical properties, especially yellowing) to the standard bisphenol A based polycarbonate on the market. Furthermore, it would be beneficial if the polycarbonate could be easily used (e. g. without many adaptations) in standard extrusion or injection molding processes designed for bisphenol A based polycarbonate. Finally, an efficient, economically and ecologically advantageous process for preparing such a polycarbonate is needed.

At least one of the above-mentioned objects, preferably all of these objects have been solved by the present invention.

Surprisingly, the inventors found that when using at least one comonomer (either aliphatic or aromatic) together with m,m-bisphenols from lignin in a transesterification process a copolycarbonate is obtained which is amorphous. Moreover, due to the fact that it comprises m,m-bisphenols from lignin the resulting copolycarbonate comprises at least some structures that are based on natural and renewable resources. Thus, the transesterification process as such seems to be especially suitable for polymerizing the unreactive meta,meta-bisphenol, however, only if in addition a comonomer is used. Moreover, due to the fact that the copolymerization works well using the transesterification method, the copolycarbonate of the present invention can be produced in an industrial scale. It can even be produced by a simple drop in solution for standard transesterification processes using bisphenol A. This thus results in a economically and ecologically advantageous process. Copolycarbonates are obtained which have reasonable molecular weights. Such molecular weights are reasonable in the sense that the copolycarbonate of the present can be used in many applications. This is especially true, because the obtained copolycarbonates are soluble in common solvent such as THF, CHCl₃ and/or dichloromethane even at room temperature. Furthermore, the copolycarbonate can be easily used (e. g. without many adaptations) in standard extrusion or injection molding processes designed for bisphenol A based polycarbonate, because the copolycarbonate is amorphous. Using the copolycarbonates according to the present invention in such standard extrusion or injection molding processes provides an advantages approach than using the crystalline / semi-crystalline homopolycarbonates as disclosed in Green Chem. 2017, 19, 2561. Less energy is needed for melting the copolycarbonates of the present invention, because they do not exhibit a melting temperature. Thus, less energy is needed for obtaining molded articles. Furthermore, the copolycarbonates of the present invention have a monomodal molecular weight distribution. This is beneficial in that this might explain why the obtained copolycarbonates do not exhibit a melting temperature. Moreover, the properties of such polymers with monomodal weight distribution (when compared to bimodal weight distribution) is easier to handle and to predict.

Accordingly, the present invention provides an amorphous copolycarbonate comprising at least one structural unit (A) and at least one aliphatic or aromatic unit (B) 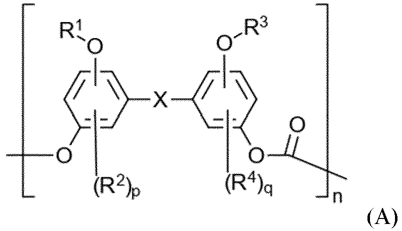 wherein
each X in structural unit (A) independently represents a single bond, -O-, -S-, -S(O)-, -S(O)₂-, -C(O)-, or an organic group having 1 to 18 carbon atoms, wherein the organic group having 1 to 18 carbon atoms can be linear, branched or cyclic, aromatic or non-aromatic, and can further comprise heteroatoms such as halogens, oxygen, nitrogen, sulfur, silicon or phosphorous,
each of R¹ and R³ independently represents a monovalent hydrocarbon group, preferably C₁-C₂₆-alkyl, C₇-C₂₆ alkylaryl or C₇-C₂₆-aralkyl,
each of R² and R⁴ independently represents a hydrogen atom, an alkoxy group, or a monovalent hydrocarbon group, preferably a hydrogen atom, C₁-C₆-alkoxy or C₁-C₆-alkyl,
each of p and q independently is 1 or 2, preferably 1 and

n represents the average number of repeating units, wherein the molar ratio of structural unit (A) to structural unit (B) is from 95:5 to 5:95.

According to the present invention the term "amorphous" means that the copolycarbonate does not show a melting point, but only a glass transition temperature. The fact whether a copolycarbonate exhibits a melting point or not can be determined e.g. by DSC. Preferably, the presence or absence of a melting point is determined by differential scanning calorimetry using ISO 11357-2:2013-05 at a heating rate of 10°C/min. Still preferably, the upper temperature limit of the temperature range which is used in the DSC is at least 20 °C above the melting point of all respective monomers which are used. For example, the upper temperature limit of the temperature range which is used in the DSC is 350 °C. This limit is especially applicable for copolycarbonates based inter alia on bisphenol A. Due to the fact that the copolycarbonate of the present invention is amorphous, the copolycarbonate can be used in standard extrusion or injection molding processes which are typically designed for amorphous polymers which do not exhibit a crystallization shrinkage. Preferably, in such processes the copolycarbonate of the present invention can simply replace the other amorphous polymer considering the glass transition temperature. Finally, as the copolycarbonate of the present invention does not show a melting temperature the temperatures for the extrusion or injection molding are lower than for crystalline or semi-crystalline polymers.

The copolycarbonate of the present invention may be linear or branched depending on the type of monomers used in the process of the present invention.

Preferably, the copolycarbonate according to the present invention is at least partially bio-based. For the purposes of the present invention, the expression "bio-based" is understood as meaning that the relevant chemical compound is at the filing date available and/or obtainable *via* a renewable and/or sustainable raw material. A renewable and/or sustainable raw material is preferably understood as meaning a raw material that is regenerated by natural processes at a rate that is comparable to its rate of depletion (see CEN/TS 16295:2012). The expression is used in particular to distinguish it from raw materials produced from fossil raw materials, also referred to in accordance with the invention as fossil-based. As an example, most bisphenol A based polycarbonates represents commonly known fossil-based polycarbonates. Whether a raw material is bio-based or fossil-based can be determined by the measurement of carbon isotopes in the raw material, since the relative amounts of the carbon isotope C¹⁴ are lower in fossil raw materials. This can be done, for example, in accordance with ASTM D6866-18 (2018) or ISO16620-1 to -5 (2015) or DIN SPEC 91236 2011-07. Exemplary bio-based materials are bisphenols as obtained from lignin.

"Alkyl" in the context of the present invention, for example and if not mentioned differently, refers to an alkane structure of which one hydrogen atom is removed. The "alkyl" of the present invention which can be linear or branched is saturated and therefore, it comprises only single bonds between adjacent carbon atoms. Preferably, alkyl groups according to the present invention comprise methyl, ethyl, *n*-propyl, isopropyl, *n*-butyl, *sec*-butyl, *tert*-butyl, *n*-pentyl, 1-methylbutyl, 2-methylbutyl, 3-methylbutyl, neopentyl, 1-ethylpropyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl and the like. These structures can be limited in choice, in case the invention defines the carbon atoms of an alkyl group in a different manner.

"Alkylene" in the context of the present invention, for example and if not mentioned differently, refers to a bridging alkane structure of which two hydrogen atoms from different carbon atoms are removed. In this context the two carbon atoms of which the two hydrogens atoms are removed can be removed from any carbon atom which is present in the alkane structure. This means that the two carbon atoms can, but not necessarily must be, adjacent to each other. An alkylene structure can be linear or branched and is saturated. In case the alkylene group comprises only one carbon atom, the alkylene group is a methylene group (-CH₂-) which is connected to the rest of the molecule by two single bonds. Preferably, alkylene groups according to the present invention comprise methylene, ethylene, *n*-propylene, isopropylene, *n*-butylene, *sec*-butylene, *tert*-butylene, *n*-pentylene, 1-methylbutylene, 2-methylbutylene, 3-methylbutylene, neopentylene, 1-ethylpropylene, n-hexylene, 1,1-dimethylpropylene, 1,2-dimethylpropylene, 1,2-dimethylpropylene, 1-methylpentylene, 2-methylpentylene, 3-methylpentylne, 4-methylpentylene, 1,1-dimethylbutylene, 1,2-dimethylbutylene, 1,3-dimethylbutylene, 2,2-dimethylbutylene, 2,3-dimethylbutylene, 3,3-dimethylbutylene, 1-ethylbutylene, 2-ethylbutylene, 1,1,2-trimethylpropylene, 1,2,2-trimethylpropylene, 1-ethyl-1-methylpropylene, 1-ethyl-2-methylpropylene, 1-ethyl-2-methylpropylene and the like. These structures can be limited in choice, in case the invention defines the carbon atoms of an alkylene group in a different manner. Moreover, the alkylene group according to the present invention optionally comprises at least one carbonyl-group, optionally comprises at least one halogen atom and/or optionally is interrupted by at least one heteroatom. Examples for such alkylene groups are -C(=O)-(CH₂)₄-C(=O)-, -C(=O)-(CH₂)₃-C(=O)-, -C(=O)-(CH₂)₂-C(=O)-, -C(CF₃)₂, -O-(CH₂)₄-O-, -O-(CH₂)₃-O-, -O-(CH₂)₂-O- or the like.

"Alkylidene" in the context of the present invention, for example and if not mentioned differently, refers to a bridging alkane structure of which two hydrogen atoms from the same carbon atom are removed. The alkylidene group optionally comprises at least one carbon-carbon-double bond, optionally comprises at least one carbonyl-group and/or optionally comprises at least one halogen atom. Preferably, alkylidene groups according to the present invention and/or in context with formula (3) comprise CH₂=C*, C(CH₃)₂=C*, isopropylidene, n-propylidene, isoheptylidene, C*(CH₃)(C(=O)CH₃), C(Cl₂)=C*, C(Br₂)=C* or the like, wherein the "C*" indicates the carbon atom which is at the position indicated as "Z" in formula (3).

"Cycloalkylene" in the context of the present invention, for example and if not mentioned differently, refers to a bridging cycloalkane structure of which two hydrogen atoms from different carbon atoms in the ring are removed. In this context the two carbon atoms of which the two hydrogens atoms are removed can be removed from any carbon atom which is present in the cycloalkane structure. This means that the two carbon atoms can, but not necessarily must be, adjacent to each other. According to the present invention the cycloaliphatic group of the cycloalkylene group is fused to at least one further cycloaliphatic ring. Examples of such a cycloalkylene group is the adamantanylene (tricyclo [3.3. 1.1 3,7 ] decanediyl).

"Cycloalkylidene" in the context of the present invention, for example and if not mentioned differently, refers to a bridging cycloalkane structure of which two hydrogen atoms from the same carbon atom in the ring are removed. The cycloaliphatic group of the cycloalkylidene group is optionally fused to at least cycloaliphatic and /or at least one aromatic ring. Examples of such cycloalkylidene groups are cyclopentylidene, cyclohexylidene, 3,3,5-trimethylcyclohexylidene, cyclodecylidene, cyclododecylidene, tetrahydrodicyclopentylidene, 9-fluorenylidene or the like.

"Aralkylidene" in the context of the present invention, for example and if not mentioned differently, refers in each case independently to a bridging straight-chain, cyclic, branched or unbranched alkyl structure of which two hydrogen atoms from the same carbon atom are removed and which is singly, multiply or polysubstituted by aryl radicals. In parallel, "aralkylene" refers in each case independently to a bridging straight-chain, cyclic, branched or unbranched alkyl structure of which two hydrogen atoms from the different carbon atoms are removed and which is singly, multiply or polysubstituted by aryl radicals. "Aryl" in the context of the present invention, for example and if not mentioned differently, is a carbocyclic aromatic radical. Examples of "aryl" are phenyl, *o-*, *p-*, *m*-tolyl, naphthyl, phenanthryl or anthracenyl. Examples of such aralkylidene groups especially in the context of formula (3) are phenyl-CH*, phenyl-C*(CH₃), naphthyl-CH*, phenyl-C*-phenyl or the like, wherein the "C*" indicates the carbon atom which is at the position indicated as "Z" in formula (3). Examples of such aralkylene groups are *m*-diisopropylidene phenylene, *p*-diisopropylidene phenylene.

"Arylalkyl" in the context of the present invention, for example and if not mentioned differently, can be an aryl group as defined above having an alkyl, alkynyl, or alkenyl group attached to the aromatic group.

"Alkoxy" in the context of the invention, for example and if not mentioned differently, refers to a linear, cyclic or branched alkyl group singularly bonded to oxygen (-OR). Preferably, alkoxy groups according to the present invention have 1 to 6 carbon atoms and, thus, comprise methoxy, ethoxy, *n*-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy. These structures can be limited in choice, in case the invention defines the carbon atoms of an alkoxy group in a different manner.

A "halogen atom" in the context of the invention, if not mentioned differently, refers to fluorine (F), chlorine (Cl), bromine (Br), or iodine (I). Preferably, a halogen atom is F, Cl, Br or I, more preferably it is Cl or Br.

Based on the above-given definitions the skilled person knows how to understand further definitions which are not explicitly defined in the passage above.

The term "average number of repeating units" is known by the skilled person. The skilled person knows how to determine this parameter. Typically, it is determined by using a GPC method. Preferably, it is determined using the GPC method as outlined in the context of the present invention.

Preferably, in structural unit (A) each X independently represents a substituted or unsubstituted C₃-C₁₈-cycloalkylidene; a C₁-C₁₈-alkylidene of the formula -C(R^{c})(R^{d})-wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula-C(=R^{c})- wherein R^{c} is a divalent C₁ -C₁₂-hydrocarbon group.

More preferably, in structural unit (A) each X independently represents a substituted or unsubstituted C₃-C₁₈-cycloalkylidene; a C₁-C₁₈-alkylidene of the formula -C(R^{c})(R^{d})-wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula-C(=R^{c})- wherein R^{c} is a divalent C₁ -C₁₂-hydrocarbon group,
each of R¹ and R³ independently represents C₁-C₂₆-alkyl, C₇-C₂₆ alkylaryl or C₇-C₂₆-aralkyl,
each of R² and R⁴ independently represents a hydrogen atom, C₁-C₆-alkoxy or C₁-C₆-alkyl, and
each of p and q independently is 1 and n represents the average number of repeating units.

Still more preferably, each of R² and R⁴ in structural unit (A) are methyl, ethyl or propyl.

Still more preferably, structural unit (A) is represented by formula (A1) 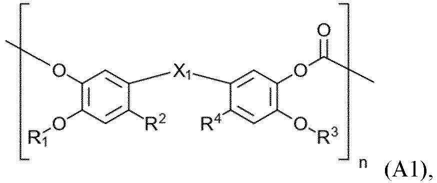
wherein each X₁ independently represents a linear or branched C₁-C₁₀-alkylidene or C₁-C₁₀-alkylene, preferably a linear C₁-C₄-alkylene or a linear or branched C₁-C₆-alkylene, still more preferably methylene,
each of R¹ and R³ independently represents a C₁-C₂₆-alkyl, C₇-C₂₆ alkylaryl or C₇-C₂₆-aralkyl, preferably methyl, ethyl, propyl, octyl, isooctyl, benzyl, ethylphenyl, butlyphenyl, propyldiphenyl or cyclohexylphenyl,
each of R² and R⁴ independently represents a hydrogen atom, C₁-C₆-alkoxy or C₁-C₆-alkyl, preferably a C₁-C₄-alkyl, still more preferably methyl, ethyl, propyl, most preferably methyl, still most preferably ethyl or still most preferably propyl, and
n represents the average number of repeating units.

More preferably, each X₁ in formula (A1) independently represents a linear C₁-C₄-alkylidene or a linear or branched C₁-C₆-alkylene, still more preferably methylene, each of R¹ and R³ independently represents methyl or ethyl,
each of R² and R⁴ independently represents a hydrogen atom, methyl, ethyl or propyl and
n represents the average number of repeating units.

Preferably, X in structural unit (A) or X₁ in structural unit (A1) can be a substituted or unsubstituted C₃-C₁₈-cycloalkylidene; a C₁-C₁₈-alkylidene of the formula -C(R^{c})(R^{d})-wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula-C(=R^{c})- wherein R^{c} is a divalent C₁ -C₁₂-hydrocarbon group. Still preferably, each of R¹ and R³ independently represents C₁-C₂₆-alkyl, C₇-C₂₆ alkylaryl or C₇-C₂₆-aralkyl. Even more preferably each of R¹ and R³ independently represents methyl, ethyl, propyl, octyl, isooctyl, benzyl, ethylphenyl, butylphenyl, propyldiphenyl, or cyclohexylphenyl. Most preferably, each of R¹ and R³ is methyl.

Preferably, X in structural unit (A) or X₁ in structural unit (A1) represents methylene, cyclohexyl-methylene, 2-[2.2.1]- bicycloheptylidene, ethylidene, isopropylidene, neopentylidene, cyclohexylidene, cyclopentadecylidene, cyclododecylidene, or adamantylidene. Still preferably, X represents a C₁-C₁₈-alkylidene of the formula-C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl, preferably hydrogen or C₁-C₁₂-alkyl. Still more preferably, R^{c} and R^{d} are each independently hydrogen or C₁-C₆ alkyl. Most preferably, R^{c} is hydrogen and R^{d} is methyl, ethyl, propyl or butyl. At the same time, most preferably each of R¹ and R³ is methyl.

Preferably, each of R² and R⁴ in structural unit (A) or (A1) independently represents a hydrogen atom, an alkoxy group, or a monovalent hydrocarbon group, preferably a hydrogen atom, C₁-C₆-alkoxy or C₁-C₆-alkyl, even more preferably a hydrogen atom or C₁-C₄-alkyl.

Preferably each of p and q in structural unit (A) or (A1) is 1. In this case it is most preferred that R² and R⁴ are both C₁-C₄-alkyl.

Preferably, each X in structural unit (A) or X₁ in structural unit (A1) independently represents a C₁-C₆-alkylidene of the formula -C(R^{c})(R^{d})- wherein R^{c} and R^{d} are each independently hydrogen or C₁-C₅-alkyl.

Still preferably, each X in structural unit (A) or X₁ in structural unit (A1) independently represents a C₁-C₄-alkylidene of the formula -C(R^{c})(R^{d})- wherein R^{c} and R^{d} are each independently hydrogen or C₁-C₃-alkyl, preferably hydrogen
each of R¹ and R³ independently represents methyl or ethyl,
each of R² and R⁴ independently represents a hydrogen atom, methyl, ethyl or propyl.

Preferably, the copolycarbonate of the present invention is characterized in that the at least one aliphatic or aromatic unit (B) is selected from the group of structural units of formula (3) to (10), wherein 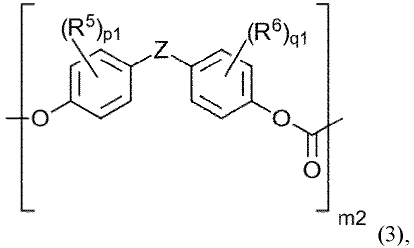
wherein each Z in formula (3) independently represents a single bond, -S(=O)₂-, -C(=O)-, -O-, -S-, -S(=O)-, -CH(CN)-, linear or branched C₁-C₆-alkylene which optionally comprises at least one carbonyl-group, optionally comprises at least one halogen atom and/or optionally is interrupted by at least one heteroatom, C₂-C₁₀-alkylidene which optionally comprises at least one carbon-carbon-double bond, optionally comprises at least one carbonyl-group and/or optionally comprises at least one halogen atom, C₅-C₁₂-cycloalkylene, wherein the cycloaliphatic group is fused to at least one further cycloaliphatic ring, C₅-C₁₅-cycloalkylidene wherein the cycloaliphatic group is optionally fused to at least one cycloaliphatic and /or at least one aromatic ring, C₇-C₂₀-aralkylidene, C₈-C₂₀-aralkylene, C₆-C₁₂-arylene optionally being fused to further aromatic rings which optionally may comprise at least one hetero atom, formula (B1-A), formula (B1-B), formula (B1-C) or formula (B1-D) 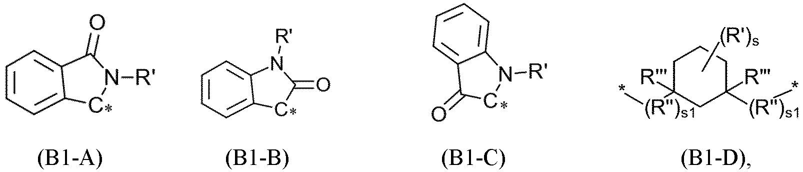
wherein in formulae (B1-A), (B1-B) and (B1-C) each R' independently represents a linear C₁-C₄-alkyl, branched C₃-C₄-alkyl, aralkyl or aryl and the "C*" indicates the quaternary carbon atom which is at the position indicated as "Z" in formula (3), and wherein in formula (B1-D) each R' independently represents a linear C₁-C₄-alkyl, branched C₃-C₄-alkyl, each R" independently represents a linear C₁-C₄-alkylene, branched C₃-C₄-alkylene, each R‴ independently represents H or linear C₁-C₃-alkyl, s is 0 to 2 and each s1 independently is 0 or 1, and the "*" indicate the bonds which link "Z" to the aromatic rings in formula (3),
each R⁵ and R⁶ independently represents H, C₁-C₁₈-alkyl, C₅-C₆-cycloalkyl, C₁-C₅-alkenyl-, C₁-C₁₈-alkoxy, phenoxy, halogen atom, C₆-C₁₈-aryl or C₇-C₁₈-aralkyl,
each of p1 and q1 is 1 to 4 and
m2 represents the average number of repeating units; 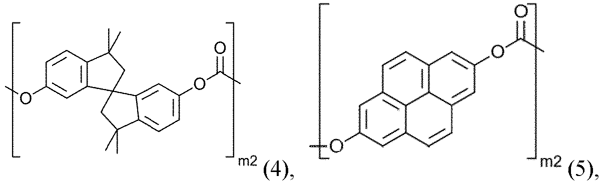 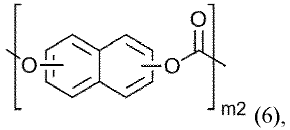
wherein in formula (4) to (6) m2 represents the average number of repeating units; 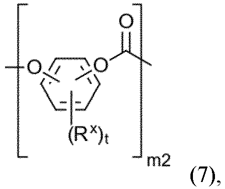
wherein each R^{x} independently represents linear or branched C₁-C₆-alkyl, C₁-C₁₂-aryl, C₁-C₈-aralkyl or a halogen atom, t is 0 to 4 and m2 represents the average number of repeating units; 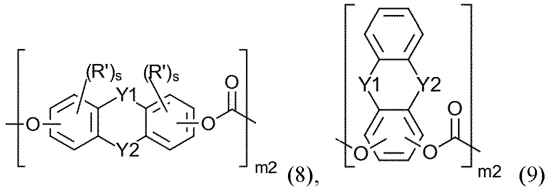
wherein in formula (8) and (9) each Y1 independently represents oxygen, sulfur or N-R^{y}, wherein R^{y} is H or -CH₃, each Y2 interpedently represents a single bond, oxygen, sulfur or N-R^{y} as defined above and m2 represents the average number of repeating units and in formula (8) each R' independently represents a linear C₁-C₄-alkyl, branched C₃-C₄ alkyl, aralkyl or aryl and s is 0 to 2; 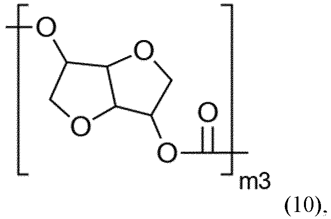
wherein m3 represents the average number of repeating units.

The resulting polycarbonate is a copolycarbonate according to the present invention. The skilled person understands that there might be an overlap between the structure of chemical formula (A) and formula (3). However, according to the present invention the espression "comprising at least one structural unit (A) and at least one aliphatic or aromatic unit (B)" preferably is to be understood that the structure of formula (A) needs to be mandatorily different than the structure of formula (B). Only by this a copolycarbonate comprising two different structural units results. Thus, preferably the structure of chemical formula (A) is different from the structure of chemical unit (B), especially of formula (3).

Preferably, the at least one aliphatic or aromatic unit (B) of the copolycarbonate of the present invention is selected from one structural unit selected from the group of structural units of formula (3), (4), (7) and (10),
wherein in formula (3) each Z independently represents a single bond, -S(=O)₂-, -C(=O)-, -O-, -S-, -S(=O)-, linear or branched C₁-C₆-alkylene, C₂-C₁₀-alkylidene which optionally comprises at least one carbon-carbon-double bond, C₅-C₁₅-cycloalkylidene wherein the cycloaliphatic group is optionally fused to at least cycloaliphatic and /or at least one aromatic ring, C₇-C₁₅-aralkylidene, the C₈-C₁₅-aralkylene of formula (B1-E) 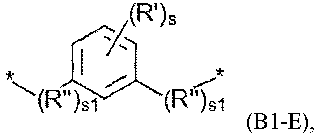
wherein in formula (B1-E) each R' independently represents a linear C₁-C₄-alkyl, branched C₃-C₄ alkyl, each R" independently represents a linear C₁-C₄-alkylene, branched C₃-C₄ alkyl, s is 0 to 2 and each s1 independently is 0 or 1, and the "*" indicate the bonds which link "Z" to the aromatic rings in formula (3),
formula (B1-A), formula (B1-B), formula (B1-C),
each R⁵ and R⁶ independently represents H, C₁-C₁₈-alkyl, C₅-C₆-cycloalkyl, C₁-C₁₈-alkoxy, phenoxy, C₆-C₁₈-aryl or C₇-C₁₈-aralkyl,
each of p1 and q1 is 1 to 4 and m2 represents the average number of repeating units.

Still preferably, the polycarbonate of the present invention additionally comprises at least one structural unit selected from the group of structural units of formula (3), wherein each Z independently represents a single bond, C₂-C₆-alkylidene, C₅-C₁₂-cycloalkylidene wherein the cycloaliphatic group is optionally fused to at least one aromatic ring,
formula (B1-A), formula (B1-B), formula (B1-C),
each R⁵ and R⁶ independently represents H, C₁-C₃-alkyl, C₁-C₁₈-alkoxy,
each of p1 and q1 is 1 to 4 and m2 represents the average number of repeating units.

Most preferably, the at least one aliphatic or aromatic unit (B) is selected from the group of structural units of formula (3) or (10), wherein the structural units of formula (3) are represented by at least one structural unit selected from the group of structural units of formula (3a) to (3k) 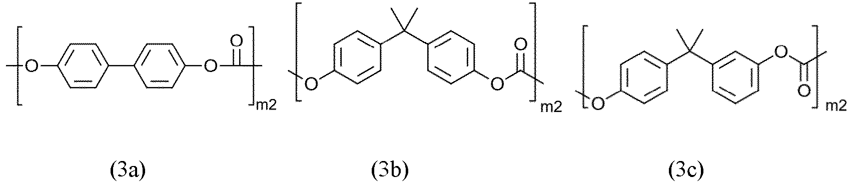 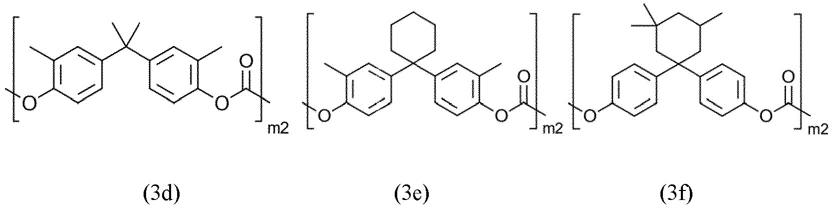 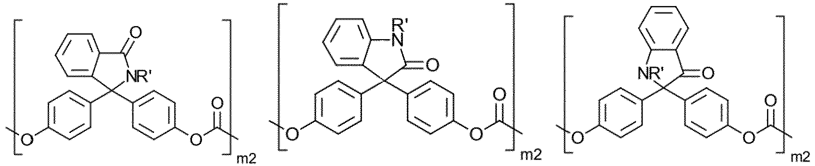 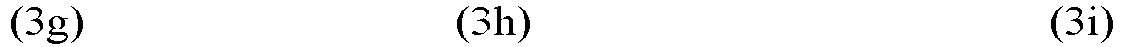 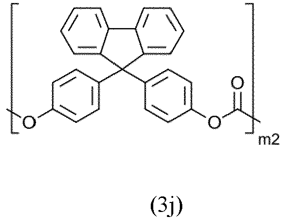 wherein in formulae (3g), (3h) and (3i) R' represents methyl or phenyl.

Still most preferably, the at least one aliphatic or aromatic unit (B) is selected from the group of structural units of formula (3b), (3f) or (10).

Structural units (A) and (B) recite "n" and "m2" or "m3" as number of repeating units. Preferably, the average sum of all ns and all m2s in one polymer chain of the copolycarbonate of the present invention is 20 to 80, more preferably it is 25 to 75, even more preferably it is 30 to 70, still more preferably it is 35 to 65 and most preferably it is 40 to 60. This does not mean that such a copolycarbonate cannot comprise any terminal groups or any other structures which are due to impurities or the like. However, such a copolycarbonate essentially consist of structures of formula (A) and (B) and furthermore, only one type of repeating unit of structural unit (A) and (B). The skilled person is able to transfer this average sum of n and m2 to a number average molecular weight. Thus, the skilled person is also able to calculate n and m2 based on the molecular weight and the ratio of structural unit (A) and (B).

According to the present invention, the copolycarbonate preferably has a weight average molecular weight of 4 000 g/mol to 50 000 g/mol, preferably 8 000 g/mol to 40 000 g/mol and more preferably 10 000 g/mol to 35 000 g/mol as determined via gel permeation chromatography in dichloromethane using a bisphenol A-polycarbonate calibration. Preferably, this gel permeation chromatography is calibrated using a bisphenol A polycarbonate and dichloromethane as eluent. Typically, linear polycarbonate (obtained from BPA and phosgene) having a known molecular weight distribution of PSS Polymer Standards Service GmbH, Deutschland can be used for the calibration. Most preferably, the calibration is performed according to method 2301-0257502-09D (from 2009 in German) from the company Currenta GmbH & Co. OHG, Leverkusen. The eluent is dichloromethane. Preferably, a combination of columns based on crosslinked styrene divinylbenzene resins is used. Still preferably, the diameter of the analytical columns is 7.5 mm, length of 300 mm. The particle size of the column material is preferably 3 µm to 20 µm. The concentration of the solution is preferably 0.2 wt.-%. The flow rate is preferably 1.0 ml/min. The temperature of the solution is preferably 30 °C. Preferably, a UV- and/or RI-detection is used. Preferably, the copolycarbonate of the present invention has a monomodal molecular weight distribution. This preferably means that the GPC curve above 1000 g/mol of the copolycarbonate of the present invention only shows one M_{Peak}/only has one maximum.

The weight average molecular weight as defined according to the present invention ensures that the resulting copolycarbonate exhibits good mechanical properties in terms of tensile strength and processing parameters. It has been surprisingly found that the resulting tensile strength is comparable to the tensile strength of bisphenol A based polycarbonate having a comparable number average molecular weight. Moreover, the fact that the copolycarbonate of the present invention preferably shows a monomodal molecular weight distribution shows that the polymerization as such can be easily handled and that the content of monomers and/or oligomers in the resulting copolycarbonate can be reduced. This also has advantages on processing of the resulting copolycarbonate. This shows that the m,m-bisphenols from lignin can be polymerized as drop-in solution in existing facilities for example for polymerizing bisphenol A via transesterification.

In particular the polycarbonate condensate of the present invention has a glass transition temperature above 100 °C, preferably above 110 °C and more preferably above 112 °C. This glass transition temperature ensures that the copolycarbonate of the present invention is useful for all applications for which also BPA based polycarbonates are used. Preferably, the glass transition temperature can be determined by differential scanning calorimetry ISO 11357-2:2013-05 at a heating rate of 10 °C/min. The skilled person knows that the type of comonomer (structural unit (B)) can have an impact on the resulting glass transition temperature.

The copolycarbonate has a molar ratio of structural unit (A) to structural unit (B) from 95:5 to 5:95, preferably from 75:25 to 8:92, more preferably from 71:29 to 9:91, still more preferably from 60:40 to 10:90, still more preferably 50:50 to 11:89, still more preferably 40:60 to 12:88 and most preferably from 30:70 to 15:85. In contrast to the prior art the ranges of molar ratios of structural unit (A) to structural unit (B) can be broadly chosen. This is still true for short alkyl chains (X in formula (A) is methylene). Preferably, the molar ratio of structural unit (A) and (B) can be determined by total hydrolysis. Preferably, the respective copolycarbonate is subjected to a total hydrolysis to form the corresponding degradation products which are the corresponding monomeric structural units (A) and (B). The ratio of those degradation products can be determined by ¹H-NMR or HPLC (the latter may be accomplished for example as follows: The copolycarbonate sample is hydrolyzed under reflux by means of sodium methoxide. The corresponding solution is acidified and concentrated to dryness. The drying residue is dissolved in acetonitrile and the phenolic compounds are determined by means of HPLC with UV detection.

According to the present invention, it is possible to fine-tune the resulting properties by choosing the molar ratio of structural units (A) and (B). However, for the sake of a copolycarbonate having a high content of bio-based structural units, it is preferred to have a high content of structural units (A).

Preferably, the copolycarbonate of the present invention comprises at least 30 wt.-%, more preferably at least 60 wt.-%, still more preferably at least 80 wt.-% and most preferably at least 90 wt.-% of the sum of structural units (A) and (B), wherein the wt.-% is based on the total weight of the copolycarbonate. Most preferably, the copolycarbonate essentially consists of or consists of the structural units (A) and (B). It is clear that the term "consists of" in this case excludes the terminal groups which are additionally present.

In a further aspect of the present invention a molding compound comprising the copolycarbonate of the present invention in each definition as given above is provided. By addition of further thermoplastic polymers and/or additive such molding compounds can be obtained. Furthermore, another aspect of the present invention provides a molded article comprising the copolycarbonate of the present invention in each definition as given above. Such molded articles can be obtained by process known to the skilled person such as extrusion, injection molding, blow molding or thermoforming of sheets or plates. As said above, the copolycarbonate of the present invention provides for more ecological processes for preparing molded articles, because it is amorphous. Moreover, the copolycarbonate of the present invention can be used in standard process and apparatuses which are already present and used for example for BPA based polycarbonates. It is preferred that the molded article of the present invention is obtained by extrusion or injection molding.

In another aspect of the present invention a process is provided which results in an amorphous copolycarbonate which comprises structural units (A) as defined above. Preferably, the process of the present invention results in the copolycarbonate of the present invention in each definition as given above. This means that especially the molecular weight of the copolycarbonate as defined above can be obtained by the process of the present invention.

Accordingly, a process for preparing an amorphous copolycarbonate is provided, characterized in that
(I) 5 to 95 mol-% of at least one diol of formula (1) 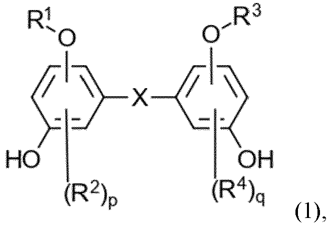 wherein
   each X independently represents a single bond, -O-, -S-, -S(O)-, -S(O)₂-, -C(O)-, or an organic group having 1 to 18 carbon atoms, wherein the organic group having 1 to 18 carbon atoms can be cyclic or acyclic, aromatic or non-aromatic, and can further comprise heteroatoms such as halogens, oxygen, nitrogen, sulfur silicon or phosphorous,
   each of R¹ and R³ independently represents a monovalent hydrocarbon group preferably C₁-C₂₆-alkyl, C₇-C₂₆ alkylaryl or C₇-C₂₆-aralkyl, and
   each of R² and R⁴ independently represents a hydrogen atom, an alkoxy group, or a monovalent hydrocarbon group, preferably a hydrogen atom, C₁-C₆-alkoxy or C₁-C₆-alkyl, and
   each of p and q independently is 1 or 2, preferably 1, and
(II) 95 to 5 mol-% of at least one aromatic or aliphatic diol, wherein the mol-% are based on the sum of (I) and (II)
   are reacted in the melt with
(III) at least one diaryl carbonate of formula (2) 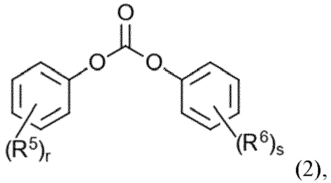
   wherein each R¹ and R⁶ independently represents H, C₁-C₃₄-alkyl, C₇-C₃₄-aralkyl, C₆-C₃₄-aryl or -COO-R', wherein R' represents C₁-C₃₄-alkyl, C₇-C₃₄-aralkyl or C₆-C₃₄-aryl and
   each of r and s represents 1 to 5.

Preferably, with respect to the diol of formula (1) each X independently represents a substituted or unsubstituted C₃-C₁₈-cycloalkylidene; a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula -C(=R^{c})- wherein R^{c} is a divalent C₁ -C₁₂-hydrocarbon group,
each of R¹ and R³ independently represents C₁-C₂₆-alkyl, C₇-C₂₆ alkylaryl or C₇-C₂₆-aralkyl,
each of R² and R⁴ independently represents a hydrogen atom, C₁-C₆-alkoxy or C₁-C₆-alkyl, and each of p and q independently is 1.

Preferably, X in formula (1) can be a substituted or unsubstituted C₃-C₁₈-cycloalkylidene; a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula -C(=R^{c})- wherein R^{c} is a divalent C₁ -C₁₂-hydrocarbon group. Still preferably, each of R¹ and R³ independently represents C₁-C₂₆-alkyl, C₇-C₂₆ alkylaryl or C₇-C₂₆-aralkyl. Even more preferably each of R¹ and R³ independently represents methyl, ethyl, propyl, octyl, isooctyl, benzyl, ethylphenyl, butylphenyl, propyldiphenyl, or cyclohexylphenyl. Most preferably, each of R¹ and R³ is methyl.

Preferably, X in formula (1) represents methylene, cyclohexyl-methylene, 2-[2.2.1]-bicycloheptylidene, ethylidene, isopropylidene, neopentylidene, cyclohexylidene, cyclopentadecylidene, cyclododecylidene, or adamantylidene. Still preferably, X represents a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl, preferably hydrogen or C₁-C₁₂-alkyl. Still more preferably, R^{c} and R^{d} are each independently hydrogen or C₁-C₆ alkyl. Most preferably, R^{c} is hydrogen and R^{d} is methyl, ethyl, propyl or butyl. At the same time, most preferably each of R¹ and R³ is methyl.

Preferably, each of R² and R⁴ in formula (1) independently represents a hydrogen atom, an alkoxy group, or a monovalent hydrocarbon group, preferably a hydrogen atom, C₁-C₆-alkoxy or C₁-C₆-alkyl, even more preferably a hydrogen atom or C₁-C₄-alkyl.

Preferably each of p and q in formula (1) is 1. In this case it is most preferred that R² and R⁴ are both C₁-C₄-alkyl.

Preferably, each X in formula (1) independently represents a C₁-C₆-alkylidene of the formula -C(R^{c})(R^{d})- wherein R^{c} and R^{d} are each independently hydrogen or C₁-C₅-alkyl.

Still preferably, in formula (1) each X independently represents a C₁-C₄-alkylidene of the formula -C(R^{c})(R^{d})- wherein R^{c} and R^{d} are each independently hydrogen or C₁-C₃-alkyl, preferably hydrogen,
each of R¹ and R³ independently represents methyl or ethyl,
each of R² and R⁴ independently represents a hydrogen atom, methyl, ethyl or propyl.

Preferably, the process of the present invention is characterized in that the at least one aromatic or aliphatic diol (II) is selected from the group of structural units of formula (III) to (X), wherein 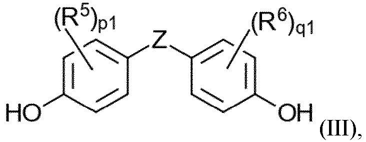 wherein in formula (III) each Z, R⁵, R⁶, p1 and q1 is as defined for formula (3), 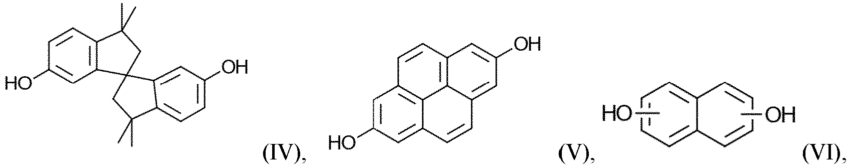 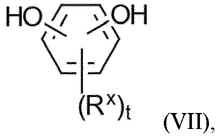 wherein in formula (VII) each R^{x} and each t is as defined for formula (7), 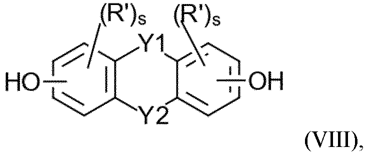 wherein in formula (VIII) each Y1, Y2, R' and s is as defined for formula (8), 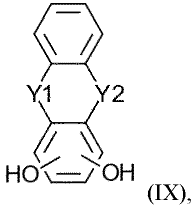 wherein in formula (IX) each Y1 and Y2 is as defined for formula (9),

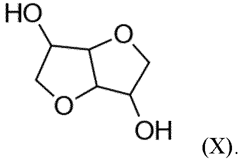

The person skilled in the art is able to see the relationship between the above mentioned diols and the respective structures of formulae (3) to (10). Thus, he is also able to transfer all preference that are given with respect to the copolycarbonate of the present invention to the diols as shown above.

Most preferably, the process of the present invention is characterized in that the at least one aromatic or aliphatic diol (II) is bisphenol A or isosorbide.

In the process of the present invention, a diaryl carbonate of formula (2) is used. Preferably, in formula (2) each R¹ and R⁶ independently represents H, C₁-C₁₀-alkyl, C₇-C₁₅-aralkyl, C₆-C₁₂-aryl or -COO-R', wherein R' represents C₁-C₅-alkyl, C₇-C₁₂-aralkyl or C₆-C₁₂-aryl and each of r and s represents 1 to 3. More preferably, the diaryl carbonate of formula (2) is selected from the group consisting of diphenylcarbonate, 4-tert-butylphenyl-phenyl-carbonate, di-(4-tert-butylphenyl)-carbonate, biphenyl-4-yl-phenyl-carbonate, di-(biphenyl-4-yl)-carbonate, 4-(1-methyl-1-phenylethyl)-phenyl-phenyl-carbonate and di-[4-(1-methyl-1-phenylethyl)-phenyl]-carbonate.

Preferably, in the process of the present invention the molar ratio of the diaryl carbonate of formula (2) to the sum of the diol of formula (1) and the at least one aromatic or aliphatic diol is 1.01 to 1.09, preferably 1.03 to 1.07.

The process of the present invention is characterized in that the reaction is performed in the melt. This preferably means that the process is conducted at temperatures which are above the melting / glass transition temperatures of all educts and products. The skilled person knows how to conduct the process in the melt (so called melt transesterification). For example it is described in "Schnell", Chemistry and Physics of Polycarbonates, Polymer Reviews, Vol. 9, Interscience Publishers, New York, London, Sydney 1964, in D.C. Prevorsek, B.T. Debona and Y. Kersten, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), in D. Freitag, U. Grigo, P.R. Miller, N. Nouvertne, BAYER AG, "Polycarbonates" in Encyclopedia of Polymer Science and Engineering, Vol. 11, Second Edition, 1988, pages 648-718 and finally in Dr. U. Grigo, K. Kircher and P.R. Miller "Polycarbonate" in Becker/Braun, Kunststoff-Handbuch [Plastics Handbook], Volume 3/1, Polycarbonate, Polyacetale, Polyester, Celluloseester [Polycarbonates, polyacetals, polyesters, cellulose esters], Carl Hanser Verlag, Munich, Vienna 1992, pages 117-299.

The preparation of specific copolycarbonates via melt transesterification is often more economically favorable than via interphase phosgenation, because of the smaller volume of these products. In addition, educts that require special handling such as phosgene can be avoided. Finally, a polymerization via the melt transesterification does not require the use of a solvent and thus, needs less purifying of the resulting product.

In the melt transesterification the reactants are preferably melted under reduced pressure. According to the plant construction, during the melting phase, atmospheric pressure, preferably gentle vacuum, i.e. absolute pressures of lower than 200 mbar, especially preferably 100-200 mbar and most preferably less than 100 mbar can be applied. However, the reactants can also be melted under standard pressure, preferably under protective gas atmosphere, for example nitrogen. The melting is preferably effected at a temperature in the range from 175 to 400°C, more preferably in the range from 180 to 350°C, most preferably in the range from 185 to 320°C. For the reaction or condensation phase, the temperatures and pressures mentioned above apply. Preferably, the values as given above are valid for a the aromatic or aliphatic diol (II) being bisphenol A. However, the skilled person is able to adapt the respective parameters depending on the melting temperature of the diol(s) (II) which is/are used.

For carrying out the process according to the invention, for example, it is possible to use a plant design as shown in WO-A 02/077 067.

In accordance with the invention, the process preferably carried out in the absence of an additional organic solvent. The process according to the invention, therefore, may preferably be carried out without solvent. This does not according to the invention exclude the possibility that both the diaryl carbonate used and the condensation product formed in the reactions may be present as solvent in these reaction steps (where possible). This is the case in particular if the carbonate is used in a stoichiometric excess with respect to the diols. This preferred method variant is particularly gentle. However, according to the invention it is preferred that no additional organic solvent is added to the process. As a result of the absence of an additional organic solvent, the process can be conducted favorably and in an environmentally friendly manner.

The diol of formula (1) and the diols (I) and (II) may be reacted according to the process of the present invention using at least one catalyst. A reaction mode without a catalyst is possible in principle but higher temperatures and longer residence times may have to be accepted as a result. Preferably, the process of the present invention is characterized in that the reaction is performed in the presence of at least one catalyst which is selected from the group consisting of ammonium catalysts,phosphonium catalyst and organic bases. The skilled person is capable of choosing the correct catalyst in consideration of the reactivity of the monomers to be used.

Catalysts suitable for the process according to the invention are for example
ammonium catalysts such as for example tetramethylammonium hydroxide, tetramethylammonium acetate, tetramethylammonium fluoride, tetramethylammonium tetraphenylboranate, dimethyldiphenylammonium hydroxide, tetraethylammonium hydroxide, cetyltrimethylammonium tetraphenylboranate and cetyltrimethylammonium phenoxide. Especially suitable are phosphonium catalysts of formula (K): 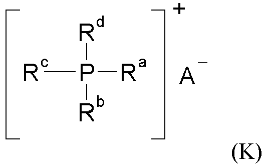
wherein R^{a}, R^{b}, R^{c} and R^{d} may be identical or different C1-C10-alkyls, C6-C14-aryls, C7-C15-arylalkyls or C5-C6-cycloalkyls, preferably methyl or C6-C 14-aryls, particularly preferably methyl or phenyl, and X- may be an anion such as hydroxide, sulfate, hydrogensulfate, hydrogencarbonate, carbonate or a halide, preferably chloride or an alkylate or arylate of formula -OR, wherein R may be C6-C14-aryl, C7-C15-arylalkyl or C5-C6-cycloalkyl, preferably phenyl.

Preferably, the organic bases is a tertiary nitrogen base. It is more preferably selected from bases derived from guanidine, 4-dimethylaminopyridine (DMAP), 1,8-diazabicyclo[5.4.0]undec-7-ene, 1,5-diazabicyclo[4.3.0]non-5-ene, 1,5,7-triazabicyclo[4.4.0]dec-5-ene, hexamethylphosphorimide triamide, 1,2-dimethyl-1,4,5,6-tetrahydropyridine, 7-methyl-1,5,7-triazabicyclodec-5-ene, 1,8-diazabicyclo[5.4.0]undec-7-ene (DBU), DBN, ethylimidazole, N,N-diisopropylethylamine (Hünig's base), pyridine, TMG, and mixtures of these substances. Further preferably, the catalyst is selected from bases derived from guanidine, 4-dimethylaminopyridine (DMAP), 1,8-diazabicyclo[5.4.0]undec-7-ene, 1,5-diazabicyclo[4.3.0]non-5-ene, and 1,5,7-triazabicyclo[4.4.0]dec-5-ene. Particular preference is given to using 4-dimethylaminopyridine.

Particularly preferred catalysts are tetraphenylphosphonium hydroxide, 4-dimethylaminopyridine and tetraphenylphosphonium phenoxide, where tetraphenylphosphonium phenoxide is very particularly preferred. It is particularly preferable to employ the alkali metal salts or alkaline earth metal salts of the mentioned ammonium and/or phosphonium catalysts.

The catalyst is preferably employed in amounts of 1 to 10⁻⁸ mol, preferably of 10⁻⁸ to 10⁻³ mol, particularly preferably in amounts of 10⁻⁷ to 10⁻⁴ mol based on 1 mol of the sum of all diols.

The catalyst may be employed alone or as a catalyst mixture and may be added in pure form or as a solution, for example in water or in phenol (for example as a solid solution with phenol).

In the process of the present invention the molar ratio of (I) the at least one diol of formula (1) and (II) the at least one aromatic or aliphatic diol is (I) 5 to 95 mol-% and (II) 95 to 5 mol- %, preferably (I) 75 to 8 mol-% and (II) 25 to 92 mol-%, more preferably (I) 71 to 9 mol-% and (II) 29 to 91 mol-%, still more preferably (I) 60 to 10 mol-% and (II) 40 to 90 mol-%, still more preferably (I) 50 to 11 mol-% and (II) 50 to 89 mol-%, still more preferably (I) 40 to 12 mol-% and (II) 60 to 88 mol-% and most preferably (I) 30 to 15 mol-% and (II) 70 to 85 mol-%, based on the sum of (I) and (II).

### Examples

Size exclusion chromatography was performed using a PSS SECcurity System; polycarbonate calibration (according to 2301-0257502-09D method of company Currenta GmbH & Co. OHG, Leverkusen), dichloromethane as eluent, column 1 (PL-PC5) with a concentration of 2 g/l, flow rate 1.0 ml/min, at a temperature of 30°C using UV and/or RI detection.

The glass transition temperature (Tg) and presence of a melting temperature (Tm) was determined by DSC using ISO 11357-2:2013-05 at a heating rate of 10°C/min. The glass transition temperature represents the onset temperature on second heating at 10°C/min measured on a Mettler Toledo DSC. The temperatures were raised to 350 °C in the case of the copolymerization of BPL and BPA. When using this temperature limit of 350 °C decomposition was observed for the case of the copolymerization of BPL and ISB. Therefore, the upper temperature limit was set to 250 °C for this case.
BPL1: 5,5'-methylenebis(4-ethylguaiacol)
BPL2: 5,5'-methylenebis(4-methylguaiacol)
BPL3: 5,5'-methylenebis(4-n-propylguaiacol)
BPA: bisphenol A
ISB: (3R,3aR,6S,6aR)-Hexahydrofuro[3,2-b]furan-3,6-diol (isosorbide)

### Inventive examples - copolymerization of BPL and BPA

The copolycarbonates were prepared by transesterification of diphenyl carbonate.

Inventive example 3: 0.5623 g of diphenyl carbonate, 0.34 g of BPA and 0.3164 g of BPL1 were molten in an alkali-free glass test tube together with 2.8 µl tetraphenylphosphonium phenolate solution (5 wt.-% TPPP, 5 wt.-% demineralized water and 90 wt.-% phenol), and subjected to a batch transesterification under mechanical stirring (stirrer: home-made in form of a drill). The temperature was increased using a thermoblock and the vacuum was improved stepwise as follows:

| | |
|---|---|
| 1. step (45 minutes): | 210 °C, atmospheric pressure |
| 2. step (15 minutes): | 240 °C, 100 mbar absolute pressure |
| 3. step (10 minutes): | 270 °C, 50 mbar absolute pressure |
| 4. step (10 minutes): | 280 °C, 25 mbar absolute pressure |
| 5. step (20 minutes): | 300 °C, 4 mbar absolute pressure |
| 6. step (30 minutes): | 300 °C at <1 mbar absolute pressure |

The results of this polymerization are summarized in Table 1. Comparative example 1, inventive examples 2 and 4 were conducted in the same way except that the ratio of BPA and BPL1 were varied as indicated in Table 1.

**Table 1:**

| | Molar ratio of BPA/BPL1 | M_{w} (g/mol) | Tg (°C) | Tm (°C) |
|---|---|---|---|---|
| Comparative example 1 | 100/0 | 31,087 | - | - |
| Inventive example 2 | 90/10 | 33,720 | 141.1 | - |
| Inventive example 3 | 60/40 | 17,980 | 125.9 | - |
| Inventive example 4 | 30/70 | 11,230 | 113.9 | - |

| | | | | |
|---|---|---|---|---|
| *⁾ A small amount of phenol is always present due to the addition of the catalyst in a phenol-containing solution. | | | | |

As can be seen from the results of table 1 the reaction of monomeric BPL and monomeric BPA leads to copolymers having high molecular weights. With increasing amount of BPA the molecular weight increases. However, it can be seen that still with high amounts of BPL reasonable molecular weights can be obtained.

Moreover, all resulting polymers were soluble in dichloromethane (e. g. for measuring GPC the samples were fully soluble) and THF. The GPC curves were monomodal at molecular weights > 1000 g/mol.

### Inventive examples - copolymerization of BPL and ISB

Inventive example 6: 0.675 g of diphenyl carbonate, 0.263 g of ISB and 0.346 g of BPL2 were molten in an alkali-free glass flask together with 1.4 µl 4-(Dimethylamino) pyridine solution (5 wt% DMAP, 5 wt% demineralized water and 90 wt% phenol), and subjected to a batch transesterification under mechanical stirring. The temperature was increased and the vacuum was improved stepwise as follows:

| | |
|---|---|
| 1. step (45 minutes): | 210 °C, atmospheric pressure |
| 2. step (15 minutes): | 240 °C, 100 mbar absolute pressure |
| 3. step (10 minutes): | 260 °C, 50 mbar absolute pressure |
| 4. step (10 minutes): | 260 °C, 25 mbar absolute pressure |
| 5. step (20 minutes): | 260 °C, 4 mbar absolute pressure |
| 6. step (30 minutes): | 270 °C at <1 mbar absolute pressure |

The results of this polymerization are summarized in Table 2. Inventive examples 5 and 7 were conducted in the same way except that the ratio of ISB and BPL2 were varied as indicated in Table 2.

**Table 2:**

| | Molar ratio of ISB/BPL2 | M_{w} (g/mol) | Tg (°C) | Tm (°C) |
|---|---|---|---|---|
| Inventive example 5 | 90/10 | 16,381 | 155.4 | - |
| Inventive example 6 | 60/40 | 8,584 | 141.5 | - |
| Inventive example 7 | 30/70 | 4,681 | 132.4 | - |

| | | | | |
|---|---|---|---|---|
| *⁾ A small amount of phenol is always present due to the addition of the catalyst in a phenol-containing solution. | | | | |

Table 2 shows that the same trend as can be seen for BPA as comonomer. The lower the amount of BPL2, the higher the obtained molecular weights. However, the resulting polymers exhibit high glass transition temperatures while having reasonable molecular weights.

Moreover, all resulting polymers were soluble in dichloromethane (e. g. for measuring GPC the samples were fully soluble) and THF. The GPC curves were monomodal at molecular weights > 1000 g/mol.

### Examples: Homopolymerization of BPL via LPC and SPC

LPC process:
BPL1, BPL2 and BPL3 were each used in homopolymerization using the interphase phosgenation (LPC process). The reaction was conducted in a mini-glass batch reactor vessel. The respective bisphenol (0.5 g) was added to demineralized water in which NaOH was dissolved (2.0 moles of NaOH per mol bisphenol) to achieve a 2.0 wt% bisphenol solution. Subsequently, methylene chloride was added to the bisphenol solution, in an amount calculated to deliver a 2 wt% solution. The mini-glass reactor was sealed and placed in an ice-water bath and a magnetic stirrer was set to a fixed speed to create an oil in water dispersion. Phosgene was added in a semi-batch feed using a mass-flow meter into the agitated solution. Per mol of bisphenol, 1.30 mol of phosgene was added to ensure full conversion of the bisphenol. Five minutes after the addition of phosgene was completed, 0.0274 mol p-tertbutylphenol per mol bisphenol was added as chain terminator, followed by the addition of NaOH to bring the pH to a value of 11. After 30 minutes of reaction time, 0.015 mol N-ethylpiperidine per mol of bisphenol was added. It is normal for the pH to drop during the post-reaction time. After 30 minutes of post-reaction time, the phases were separated. The organic phase was washed once with 10% HCl and then three times with demineralized water. The polymers were dried in the vacuum oven overnight at 60 °C at 20 mbar. Already at this point it was obvious that no polymer with high molecular weight was formed.

The results are summarized in Table 3. The GPCs were conducted in methylene chloride using a PC calibration. No visible unsoluble residue was found when the reaction product was dissolved in methylene chloride.

**Table 3:**

| | bisphenol | M_{w} (g/mol) | Tg (°C) |
|---|---|---|---|
| Comparative example 2 | BPL1 | -* | 109.7 |
| Comparative example 3 | BPL2 | 1,883 | 125.4 |
| Comparative example 4 | BPL3 | 1,300 | 72.8 |

| | | | |
|---|---|---|---|
| * no reaction occurred, because BPL1 did not dissolve in water or methylene chloride | | | |

As can be seen from the results of Table 3, using the LPC process for homopolymerizations of *meta, meta*-BPLs no polymers could be obtained.

### SPC process:

Reference example 1: 0.3599 g of diphenyl carbonate, 0.5062 g of BPL1 were molten in an alkali-free glass test tube together with 0.6 µl tetraphenyl-phosphonium phenolate (TPPP) solution (5.57 wt.-% TPPP, 5 wt.-% demineralized water and 90 wt.-% phenol), and subjected to a batch transesterification. The test tube was connected to a distillation bridge which was connected to an Erlenmeyer. The temperature was increased and the vacuum was improved stepwise as follows:

| | |
|---|---|
| 1. step (85 min): | 228 °C, atmospheric pressure |
| 2. step (15 min): | 250 °C, 140 mbar absolute pressure |
| 3. step (15 min): | 266 °C, 51 mbar absolute pressure |
| 4. step (15 min): | 283 °C, 25 mbar absolute pressure |
| 5. step (30 min) : | 297 °C, 3.6 mbar absolute pressure |
| 6. step (45 min): | 296 °C at <1 mbar absolute pressure |

The resulting mixture was analyzed (it was removed from the test tube by using methylenchloride and dried). The results are summarized in Table 4.

Reference example 2: 0.3936 g of diphenyl carbonate, 0.5046 g of BPL2 were molten in an alkali-free glass test tube together with 0.6 µl tetraphenyl-phosphonium phenolate (TPPP) solution (5.57 wt.-% TPPP, 5 wt.-% demineralized water and 90 wt.-% phenol), and subjected to a batch transesterification. The test tube was connected to a distillation bridge which was connected to an Erlenmeyer. The temperature was increased and the vacuum was improved stepwise as follows:

| | |
|---|---|
| 1. step (80 min): | 219 °C, atmospheric pressure |
| 2. step (15 min): | 225 °C, 900 mbar absolute pressure |
| 3. step (15 min): | 241 °C, 194 mbar absolute pressure |
| 4. step (15 min): | 258 °C, 99 mbar absolute pressure |
| 5. step (15 min) : | 275 °C, 52 mbar absolute pressure |
| 6. step (15 min) : | 289 °C, 25 mbar absolute pressure |
| 7. step (30 min) : | 296 °C, 3.8 mbar absolute pressure |
| 8. step (45 min): | 296 °C at <1 mbar absolute pressure |

The resulting mixture was analyzed (it was removed from the test tube by using methylenchloride and dried). The results are summarized in Table 4. The obtained polymers were not soluble in methylene chloride. Therefore, they were dissolved in hexafluoroisopropanol and GPCs were conducted using a PMMA calibration.

**Table 4:**

| | bisphenol | M_{w} (g/mol)** |
|---|---|---|
| Reference example 1 | BPL1 | 21,890 |
| Reference example 2 | BPL2 | 24,090 |

| | | |
|---|---|---|
| ** absolute value not comparable to M_{W} as given above for the other experiments (here: GPC with HFIP and PMMA calibration) | | |

As can be seen from the above table 4, the SPC process is able to homopolymerize bisphenol lignin based monomers. However, the resulting homopolymers are not soluble in common solvents which are typically used in the polycarbonate context such as methylenechloride. This seems to be due to the fact that the resulting homopolymers are crystalline. Using comonomers in the process of the present invention provides soluble amorphous copolycarbonates comprising high amounts of bisphenol lignin based structural units.

## Claims

1. An amorphous copolycarbonate comprising at least one structural unit (A) and at least one aliphatic or aromatic unit (B) 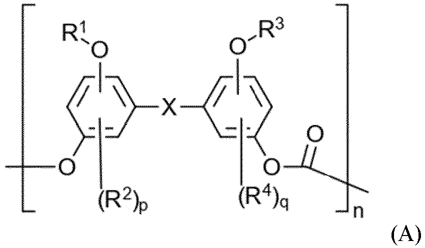 wherein
each X in structural unit (A) independently represents a single bond, -O-, -S-, -S(O)-, -S(O)₂-, -C(O)-, or an organic group having 1 to 18 carbon atoms, wherein the organic group having 1 to 18 carbon atoms can be linear, branched or cyclic, aromatic or non-aromatic, and can further comprise heteroatoms such as halogens, oxygen, nitrogen, sulfur, silicon or phosphorous,
each of R¹ and R³ independently represents a monovalent hydrocarbon group, preferably C₁-C₂₆-alkyl, C₇-C₂₆ alkylaryl or C₇-C₂₆-aralkyl,
each of R² and R⁴ independently represents a hydrogen atom, an alkoxy group, or a monovalent hydrocarbon group, preferably a hydrogen atom, C₁-C₆-alkoxy or C₁-C₆-alkyl, and
each of p and q independently is 1 or 2, preferably 1 and
n represents the average number of repeating units, wherein the molar ratio of structural unit (A) to structural unit (B) is from 95:5 to 5:95.

2. The amorphous copolycarbonate of claim 1, **characterized in that** the at least one aliphatic or aromatic unit (B) is selected from the group of structural units of formula (3) to (10), wherein 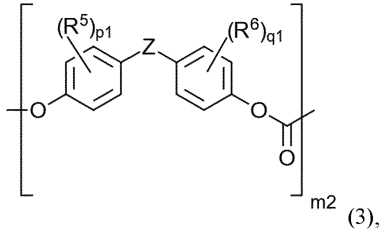
wherein each Z independently represents a single bond, -S(=O)₂-, -C(=O)-, -O-, -S-, - S(=O)-, -CH(CN)-, linear or branched C₁-C₆-alkylene which optionally comprises at least one carbonyl-group, optionally comprises at least one halogen atom and/or optionally is interrupted by at least one heteroatom, C₂-C₁₀-alkylidene which optionally comprises at least one carbon-carbon-double bond, optionally comprises at least one carbonyl-group and/or optionally comprises at least one halogen atom, C₅-C₁₂-cycloalkylene, wherein the cycloaliphatic group is fused to at least one further cycloaliphatic ring, C₅-C₁₅-cycloalkylidene wherein the cycloaliphatic group is optionally fused to at least one cycloaliphatic and /or at least one aromatic ring, C₇-C₂₀-aralkylidene, C₈-C₂₀-aralkylene, C₆-C₁₂-arylene optionally being fused to further aromatic rings which optionally may comprise at least one hetero atom, formula (B1-A), formula (B1-B), formula (B1-C) or formula (B1-D) 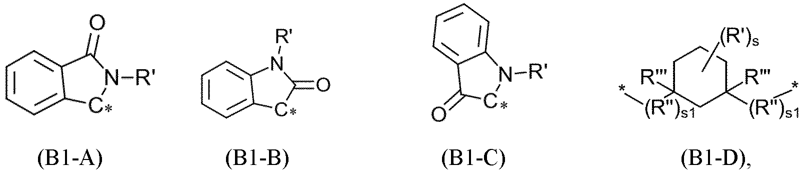
wherein in formulae (B1-A), (B1-B) and (B1-C) each R' independently represents a linear C₁-C₄-alkyl, branched C₃-C₄-alkyl, aralkyl or aryl and the "C*" indicates the quaternary carbon atom which is at the position indicated as "Z" in formula (3), and
wherein in formula (B1-D) each R' independently represents a linear C₁-C₄-alkyl, branched C₃-C₄-alkyl, each R" independently represents a linear C₁-C₄-alkylene, branched C₃-C₄-alkylene, each R‴ independently represents H or linear C₁-C₃-alkyl, s is 0 to 2 and each s1 independently is 0 or 1, and the "*" indicate the bonds which link "Z" to the aromatic rings in formula (3),
each R⁵ and R⁶ independently represents H, C₁-C₁₈-alkyl, C₅-C₆-cycloalkyl, C₁-C₅-alkenyl-, C₁-C₁₈-alkoxy, phenoxy, halogen atom, C₆-C₁₈-aryl or C₇-C₁₈-aralkyl,
each of p1 and q1 is 1 to 4 and
m2 represents the average number of repeating units; 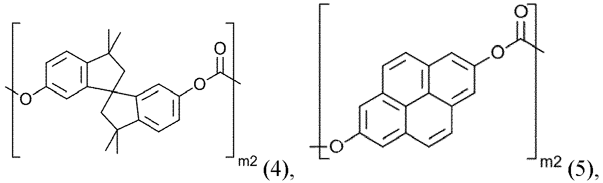 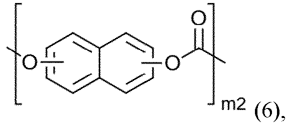
wherein in formula (4) to (6) m2 represents the average number of repeating units; 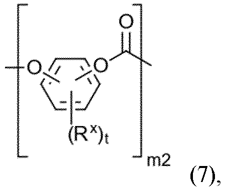
wherein each R^{x} independently represents linear or branched C₁-C₆-alkyl, C₁-C₁₂-aryl, C₁-C₈-aralkyl or a halogen atom, t is 0 to 4 and m2 represents the average number of repeating units; 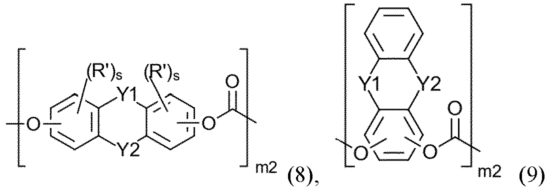
wherein in formula (8) and (9) each Y1 independently represents oxygen, sulfur or N-R^{y}, wherein R^{y} is H or -CH₃, each Y2 interpedently represents a single bond, oxygen, sulfur or N-R^{y} as defined above and m2 represents the average number of repeating units and in formula (8) each R' independently represents a linear C₁-C₄-alkyl, branched C₃-C₄ alkyl, aralkyl or aryl and s is 0 to 2; 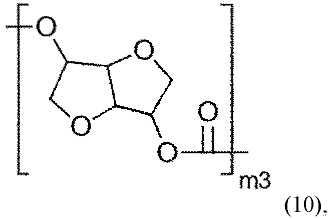
wherein m3 represents the average number of repeating units.

3. The amorphous copolycarbonate according to claim 1 or 2, **characterized in that** the molar ratio of structural unit (A) to structural unit (B) is from 75:25 to 8:92, preferably 71:29 to 9:91.

4. The amorphous copolycarbonate according to any one of claims 1 to 3, **characterized in that** in structural unit (A)
each X independently represents a substituted or unsubstituted C₃-C₁₈-cycloalkylidene; a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula -C(=R^{c})- wherein R^{c} is a divalent C₁ -C₁₂-hydrocarbon group.

5. The amorphous copolycarbonate according to any one of claims 1 to 4, **characterized in that** structural unit (A) is represented by formula (A1) 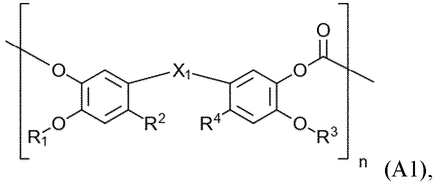
wherein each X₁ independently represents a linear or branched C₁-C₁₀-alkylidene or C₁-C₁₀-alkylene, preferably a linear C₁-C₄-alkylene or a branched C₁-C₆-alkylene,
each of R¹ and R³ independently represents a C₁-C₂₆-alkyl, C₇-C₂₆ alkylaryl or C₇-C₂₆-aralkyl, preferably methyl, ethyl, propyl, octyl, isooctyl, benzyl, ethylphenyl, butlyphenyl, propyldiphenyl or cyclohexylphenyl,
each of R² and R⁴ independently represents a hydrogen atom, C₁-C₆-alkoxy or C₁-C₆-alkyl, preferably a C₁-C₄-alkyl and
n represents the average number of repeating units.

6. The amorphous copolycarbonate according to claim 5, **characterized in that** in formula (A1)
each X₁ independently represents a linear C₁-C₄-alkylidene or a linear or branched C₁-C₆-alkylene, each of R¹ and R³ independently represents methyl or ethyl,
each of R² and R⁴ independently represents a hydrogen atom, methyl, ethyl or propyl and n represents the average number of repeating units.

7. The amorphous copolycarbonate according to any one of claims 2 to 6, **characterized in that** the at least one aliphatic or aromatic unit (B) is selected from the group of structural units of formula (3) or (10), wherein the structural units of formula (3) are represented by at least one structural unit selected from the group of structural units of formula (3a) to (3k) 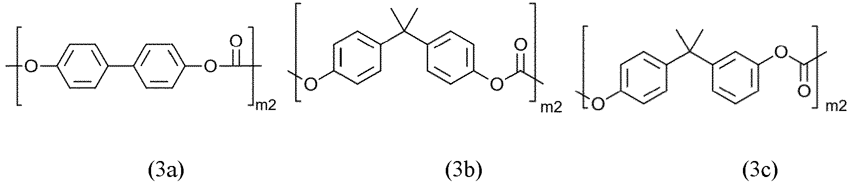 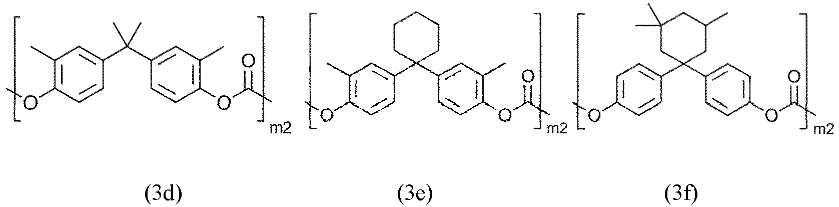 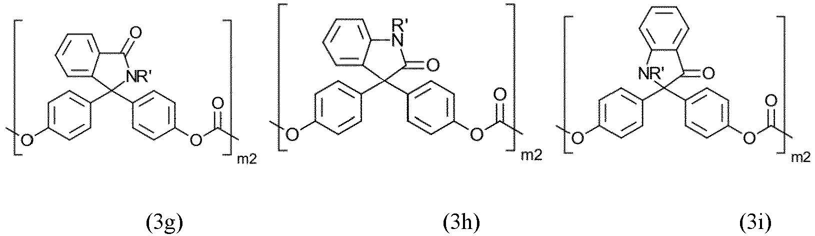 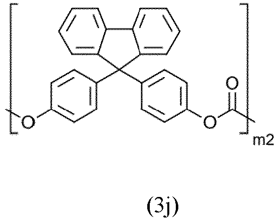 wherein in formulae (3g), (3h) and (3i) R' represents methyl or phenyl.

8. A molding compound comprising the amorphous copolycarbonate of any one of claims 1 to 7.

9. A molded article comprising the amorphous copolycarbonate of any one of claims 1 to 7.

10. The molded article of claim 9, **characterized in that** the molded article is obtained by extrusion or injection molding.

11. A process for preparing an amorphous copolycarbonate, **characterized in that**
(I) 5 to 95 mol-% of at least one diol of formula (1) 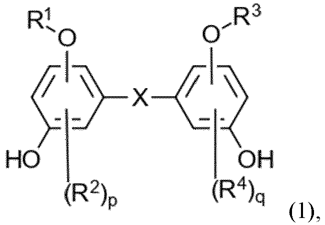 wherein
each X independently represents a single bond, -O-, -S-, -S(O)-, -S(O)₂-, -C(O)-, or an organic group having 1 to 18 carbon atoms, wherein the organic group having 1 to 18 carbon atoms can be cyclic or acyclic, aromatic or non-aromatic, and can further comprise heteroatoms such as halogens, oxygen, nitrogen, sulfur silicon or phosphorous,
each of R¹ and R³ independently represents a monovalent hydrocarbon group and each of R² and R⁴ independently represents a hydrogen atom, an alkoxy group, or a monovalent hydrocarbon group,
each of p and q independently is 1 or 2 and
(II) 95 to 5 mol-% of at least one aromatic or aliphatic diol, wherein the mol-% are based on the sum of (I) and (II)
are reacted in the melt with
(III) at least one diaryl carbonate of formula (2) 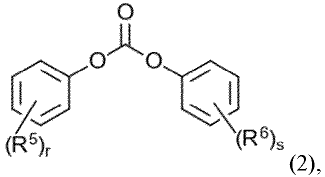
wherein each R¹ and R⁶ independently represents H, C₁-C₃₄-alkyl, C₇-C₃₄-aralkyl, C₆-C₃₄-aryl or -COO-R', wherein R' represents C₁-C₃₄-alkyl, C₇-C₃₄-aralkyl or C₆-C₃₄-aryl and
each of r and s represents 1 to 5.

12. The process according to claim 11, **characterized in that** the at least one aromatic or aliphatic diol (II) is selected from the group of structural units of formula (III) to (X), wherein 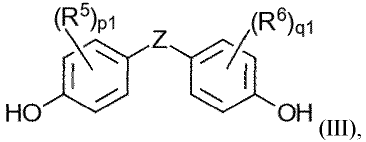 wherein in formula (III) each Z, R⁵, R⁶, p1 and q1 is as defined for formula (3) in claim 2, 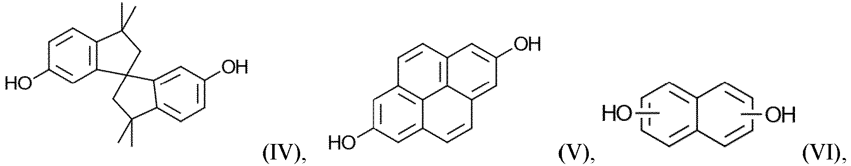 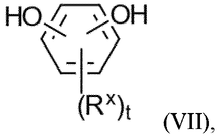 wherein in formula (VII) each R^{x} and each t is as defined for formula (7) in claim 2, 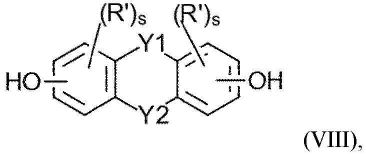 wherein in formula (VIII) each Y1, Y2, R' and s is as defined for formula (8) in claim 2, 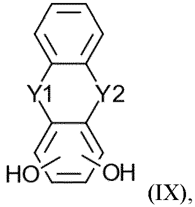 wherein in formula (IX) each Y1 and Y2 is as defined for formula (9) in claim 2, and

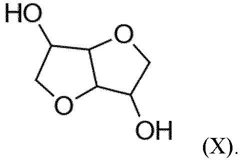

13. The process according to claim 12, **characterized in that** the at least one aromatic or aliphatic diol (II) is bisphenol A or isosorbide.

14. The process according to any one of claims 11 to 13, **characterized in that** the reaction is performed in the presence of at least one catalyst which is selected from the group consisting of ammonium catalysts, phosphonium catalyst and organic bases.

15. The process according to any one of claims 11 to 14, **characterized in that** (I) 75 to 8 mol-% and (II) 25 to 92 mol-%, preferably (I) 71 to 9 mol-% and (II) 29 to 91 mol-%, based on the sum of (I) and (II) are used.

## Patentansprüche

1. Amorphes Copolycarbonat, umfassend mindestens eine Struktureinheit (A) und mindestens eine aliphatische oder aromatische Einheit (B) 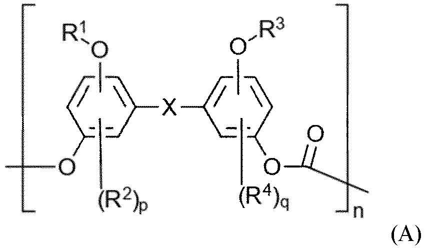 wobei
X in der Struktureinheit (A) jeweils unabhängig für eine Einfachbindung, -O-, -S-, -S(O)-, -S(O)₂-, -C(O)- oder eine organische Gruppe mit 1 bis 18 Kohlenstoffatomen steht, wobei die organische Gruppe mit 1 bis 18 Kohlenstoffatomen linear, verzweigt oder cyclisch, aromatisch oder nichtaromatisch sein kann und ferner Heteroatome wie Halogene, Sauerstoff, Stickstoff, Schwefel, Silicium oder Phosphor umfassen kann,
R¹ und R³ jeweils unabhängig für eine einwertige Kohlenwasserstoffgruppe, vorzugsweise C₁-C₂₆-Alkyl, C₇-C₂₆-Alkylaryl oder C₇-C₂₆-Aralkyl, stehen,
R² und R⁴ jeweils unabhängig für ein Wasserstoffatom, eine Alkoxygruppe oder eine einwertige Kohlenwasserstoffgruppe, vorzugsweise ein Wasserstoffatom, C₁-C₆-Alkoxy oder C₁-C₆-Alkyl, stehen und p und q jeweils unabhängig 1 oder 2, vorzugsweise 1, sind, und
n für die durchschnittliche Zahl von Wiederholungseinheiten steht, wobei das Molverhältnis von Struktureinheit (A) zu Struktureinheit (B) von 95:5 bis 5:95 beträgt.

2. Amorphes Copolycarbonat nach Anspruch 1, **dadurch gekennzeichnet, dass** die mindestens eine aliphatische oder aromatische Einheit (B) aus der Gruppe der Struktureinheiten der Formel (3) bis (10) ausgewählt ist, wobei 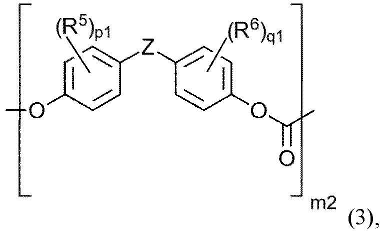 wobei Z jeweils unabhängig für eine Einfachbindung, - S(=O)₂-, -C(=O)-, -O-, -S-, -S(=O)-, -CH(CN)-, lineares oder verzweigtes C₁-C₆-Alkylen, das gegebenenfalls mindestens eine Carbonylgruppe umfasst, gegebenenfalls mindestens ein Halogenatom umfasst und/oder gegebenenfalls durch mindestens ein Heteroatom unterbrochen ist, C₂-C₁₀-Alkyliden, das gegebenenfalls mindestens eine Kohlenstoff-Kohlenstoff-Doppelbindung umfasst, gegebenenfalls mindestens eine Carbonylgruppe umfasst und/oder gegebenenfalls mindestens ein Halogenatom umfasst, C₅-C₁₂-Cycloalkylen, wobei die cycloaliphatische Gruppe an mindestens einen weiteren cycloaliphatischen Ring ankondensiert ist, C₅-C₁₅-Cycloalkyliden, wobei die cycloaliphatische Gruppe gegebenenfalls an mindestens einen cycloaliphatischen und/oder mindestens einen aromatischen Ring ankondensiert ist, C₇-C₂₀-Aralkyliden, C₈-C₂₀-Aralkylen, C₆-C₁₂-Arylen, das gegebenenfalls an weitere aromatische Ringe, die gegebenenfalls mindestens ein Heteroatom umfassen können, ankondensiert ist, Formel (B1-A), Formel (B1-B), Formel (B1-C) oder Formel (B1-D) steht, 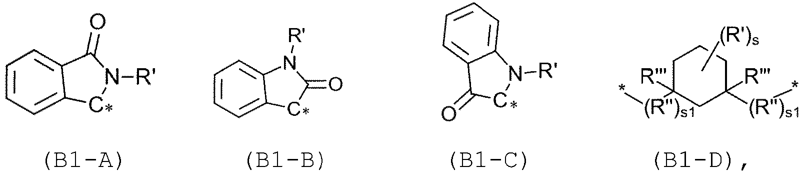
wobei in den Formeln (B1-A), (B1-B) und (B1-C) R' jeweils unabhängig für ein lineares C₁-C₄-Alkyl, verzweigtes C₃-C₄-Alkyl, Aralkyl oder Aryl steht und das "C*" das quartäre Kohlenstoffatom anzeigt, das sich in der in Formel (3) als "Z" angegebenen Position befindet, und wobei in Formel (B1-D) R' jeweils unabhängig für ein lineares C₁-C₄-Alkyl oder verzweigtes C₃-C₄-Alkyl steht, R" jeweils unabhängig für ein lineares C₁-C₄-Alkylen oder verzweigtes C₃-C₄-Alkylen steht, R‴ jeweils unabhängig für H oder lineares C₁-C₃-Alkyl steht, s 0 bis 2 ist und s1 jeweils unabhängig 0 oder 1 ist und "*" die Bindungen anzeigt, die "Z" mit den aromatischen Ringen in Formel (3) verknüpfen,
R⁵ und R⁶ jeweils unabhängig für H, C₁-C₁₈-Alkyl, C₅-C₆-Cycloalkyl, C₁-C₅-Alkenyl-, C₁-C₁₈-Alkoxy, Phenoxy, Halogenatom, C₆-C₁₈-Aryl oder C₇-C₁₈-Aralkyl stehen, p1 und q1 jeweils 1 bis 4 sind und
m2 für die durchschnittliche Zahl von Wiederholungseinheiten steht; 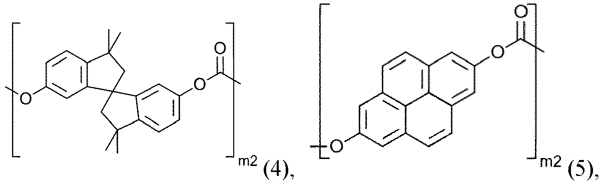 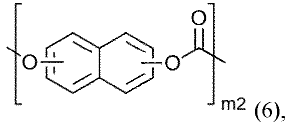
wobei in Formel (4) bis (6) m2 für die durchschnittliche Zahl von Wiederholungseinheiten steht; 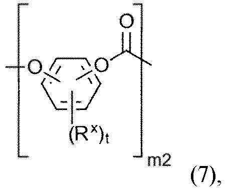
wobei R^{x} jeweils unabhängig für lineares oder verzweigtes C₁-C₆-Alkyl, C₁-C₁₂-Aryl, C₁-C₈-Aralkyl oder ein Halogenatom steht, t 0 bis 4 ist und m2 für die durchschnittliche Zahl von Wiederholungseinheiten steht; 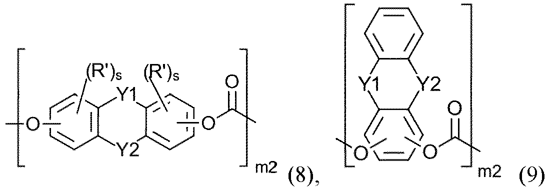
wobei in Formel (8) und (9) Y1 jeweils unabhängig für Sauerstoff, Schwefel oder N-R^{y} steht, wobei R^{y} H oder - CH₃ ist, Y2 jeweils unabhängig für eine Einfachbindung, Sauerstoff, Schwefel oder N-R^{y} gemäß obiger Definition steht und m2 für die durchschnittliche Zahl von Wiederholungseinheiten steht und in Formel (8) R' jeweils unabhängig für ein lineares C₁-C₄-Alkyl, verzweigtes C₃-C₄-Alkyl, Aralkyl oder Aryl steht und s 0 bis 2 ist; 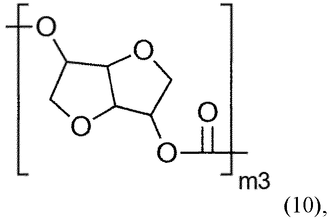
wobei m3 für die durchschnittliche Zahl von Wiederholungseinheiten steht.

3. Amorphes Copolycarbonat nach Anspruch 1 oder 2, **dadurch gekennzeichnet, dass** das Molverhältnis von Struktureinheit (A) zu Struktureinheit (B) 75:25 bis 8:92, vorzugsweise 71:29 bis 9:91, beträgt.

4. Amorphes Copolycarbonat nach einem der Ansprüche 1 bis 3, **dadurch gekennzeichnet, dass** in der Struktureinheit (A)
X jeweils unabhängig für ein substituiertes oder unsubstituiertes C₃-C₁₈-Cycloalkyliden, ein C₁-C₁₈-Alkyliden der Formel -C(R^{c})(R^{d})-, wobei R^{c} und R^{d} jeweils unabhängig Wasserstoff, C₁-C₁₂-Alkyl, C₁-C₁₂-Cycloalkyl, C₇-C₁₂-Arylalkyl, C₁-C₁₂-Heteroalkyl oder cyclisches C₇-C₁₂-Heteroarylalkyl sind, oder eine Gruppe der Formel - C(=R^{c})-, wobei R^{c} eine zweiwertige C₁-C₁₂-Kohlenwasserstoffgruppe ist, steht.

5. Amorphes Copolycarbonat nach einem der Ansprüche 1 bis 4, **dadurch gekennzeichnet, dass** die Struktureinheit (A) durch die Formel (A1) wiedergegeben wird 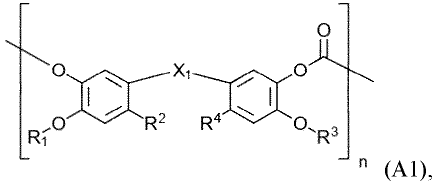
wobei X₁ jeweils unabhängig für ein lineares oder verzweigtes C₁-C₁₀-Alkyliden oder C₁-C₁₀-Alkylen, vorzugsweise ein lineares C₁-C₄-Alkylen oder ein verzweigtes C₁-C₆-Alkylen, steht,
R¹ und R³ jeweils unabhängig für ein C₁-C₂₆-Alkyl, C₇-C₂₆-Alkylaryl oder C₇-C₂₆-Aralkyl, vorzugsweise Methyl, Ethyl, Propyl, Octyl, Isooctyl, Benzyl, Ethylphenyl, Butylphenyl, Propyldiphenyl oder Cyclohexylphenyl, stehen,
R² und R⁴ jeweils unabhängig für ein Wasserstoffatom, C₁-C₆-Alkoxy oder C₁-C₆-Alkyl, vorzugsweise für ein C₁-C₄-Alkyl, stehen und
n für die durchschnittliche Zahl von Wiederholungseinheiten steht.

6. Amorphes Copolycarbonat nach Anspruch 5, **dadurch gekennzeichnet, dass** in Formel (A1)
X₁ jeweils unabhängig für ein lineares C₁-C₄-Alkyliden oder ein lineares oder verzweigtes C₁-C₆-Alkylen steht, R¹ und R³ jeweils unabhängig für Methyl oder Ethyl stehen, R² und R⁴ jeweils unabhängig für ein Wasserstoffatom, Methyl, Ethyl oder Propyl stehen und n für die durchschnittliche Zahl von Wiederholungseinheiten steht.

7. Amorphes Copolycarbonat nach einem der Ansprüche 2 bis 6, **dadurch gekennzeichnet, dass** die mindestens eine aliphatische oder aromatische Einheit (B) aus der Gruppe von Struktureinheiten der Formel (3) oder (10) ausgewählt ist, wobei die Struktureinheiten der Formel (3) durch mindestens eine Struktureinheit, die aus der Gruppe von Struktureinheiten der Formel (3a) bis (3k) ausgewählt ist, wiedergegeben werden 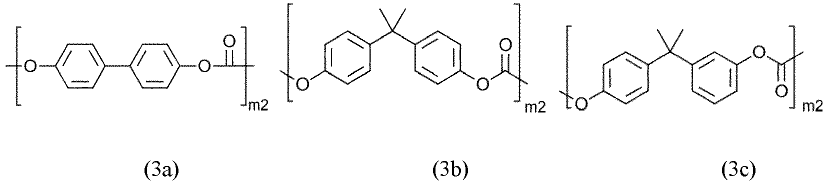 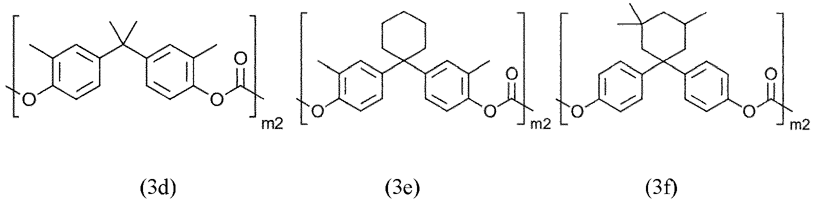 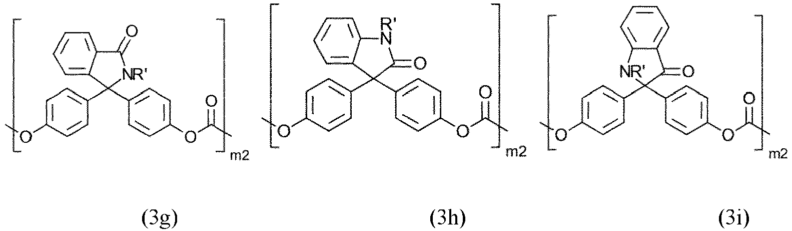 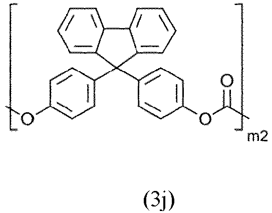 wobei in den Formeln (3g), (3h) und (3i) R' für Methyl oder Phenyl steht.

8. Formmasse, umfassend das amorphe Copolycarbonat nach einem der Ansprüche 1 bis 7.

9. Formkörper, umfassend das amorphe Copolycarbonat nach einem der Ansprüche 1 bis 7.

10. Formkörper nach Anspruch 9, **dadurch gekennzeichnet, dass** der Formkörper durch Extrusion oder Spritzgießen erhalten wird.

11. Verfahren zur Herstellung eines amorphen Copolycarbonats, **dadurch gekennzeichnet, dass** man
(I) 5 bis 95 Mol-% mindestens eines Diols der Formel (1) 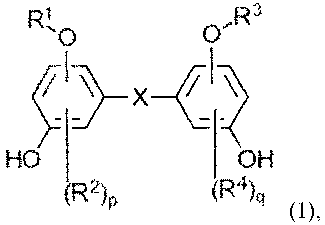 wobei
X jeweils unabhängig für eine Einfachbindung, -O-, -S-, -S(O)-, -S(O)₂-, -C(O)- oder eine organische Gruppe mit 1 bis 18 Kohlenstoffatomen steht, wobei die organische Gruppe mit 1 bis 18 Kohlenstoffatomen cyclisch oder acyclisch, aromatisch oder nichtaromatisch sein kann und ferner Heteroatome wie Halogene, Sauerstoff, Stickstoff, Schwefel, Silicium oder Phosphor umfassen kann,
R¹ und R³ jeweils unabhängig für eine einwertige Kohlenwasserstoffgruppe stehen und
R² und R⁴ jeweils unabhängig für ein Wasserstoffatom, eine Alkoxygruppe oder eine einwertige Kohlenwasserstoffgruppe stehen,
p und q jeweils unabhängig 1 oder 2 sind, und
(II) 95 bis 5 Mol-% mindestens eines aromatischen oder aliphatischen Diols, wobei sich die Mol-%-Angaben auf die Summe von (I) und (II) beziehen,
in der Schmelze mit
(III) mindestens einem Diarylcarbonat der Formel (2) 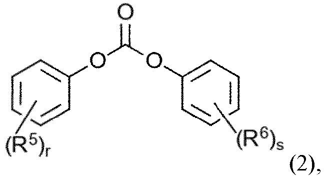
umsetzt, wobei R⁵ und R⁶ jeweils unabhängig für H, C₁-C₃₄-Alkyl, C₇-C₃₄-Aralkyl, C₆-C₃₄-Aryl oder -COO-R' stehen, wobei R' für C₁-C₃₄-Alkyl, C₇-C₃₄-Aralkyl oder C₆-C₃₄-Aryl steht, und
r und s jeweils für 1 bis 5 stehen.

12. Verfahren nach Anspruch 11, **dadurch gekennzeichnet, dass** das mindestens eine aromatische oder aliphatische Diol (II) aus der Gruppe der Struktureinheiten der Formel (III) bis (X) ausgewählt wird, wobei 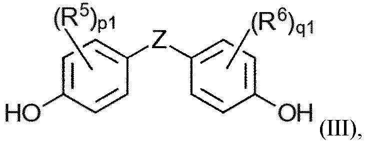 wobei in Formel (III) Z, R⁵, R⁶, p1 und q1 jeweils wie für Formel (3) in Anspruch 2 definiert sind, 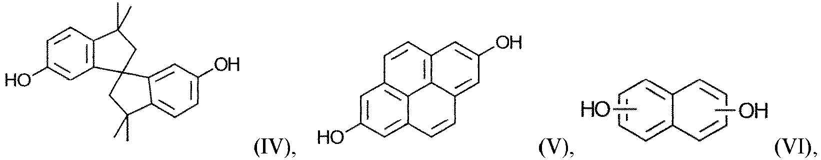 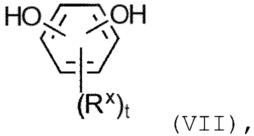 wobei in Formel (VII) R^{x} jeweils und t jeweils wie für Formel (7) in Anspruch 2 definiert sind, 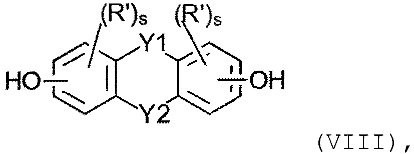 wobei in Formel (VIII) Y1, Y2, R' und s jeweils wie für Formel (8) in Anspruch 2 definiert sind, 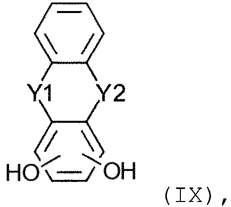 wobei in Formel (IX) Y1 und Y2 jeweils wie für Formel (9) in Anspruch 2 definiert sind, und

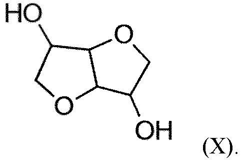

13. Verfahren nach Anspruch 12, **dadurch gekennzeichnet, dass** es sich bei dem mindestens einen aromatischen oder aliphatischen Diol (II) um Bisphenol A oder Isosorbid handelt.

14. Verfahren nach einem der Ansprüche 11 bis 13, **dadurch gekennzeichnet, dass** die Umsetzung in Gegenwart mindestens eines Katalysators durchgeführt wird, der aus der Gruppe bestehend aus Ammoniumkatalysatoren, Phosphoniumkatalysatoren und organischen Basen ausgewählt wird.

15. Verfahren nach einem der Ansprüche 11 bis 14, **dadurch gekennzeichnet, dass** man (I) 75 bis 8 Mol-% und (II) 25 bis 92 Mol-%, vorzugsweise (I) 71 bis 9 Mol-% und (II) 29 bis 91 Mol-%, bezogen auf die Summe von (I) und (II), verwendet.

## Revendications

1. Copolycarbonate amorphe comprenant au moins un motif structural (A) et au moins un motif aliphatique ou aromatique (B) 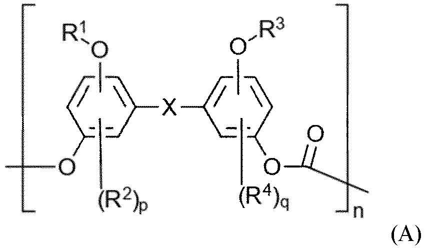 dans lequel
chaque X dans le motif structural (A) représente indépendamment une simple liaison, -O-, -S-, -S(O)-, - S(O)₂-, -C(O)-, ou un groupe organique ayant 1 à 18 atomes de carbone, le groupe organique ayant 1 à 18 atomes de carbone pouvant être linéaire, ramifié ou cyclique, aromatique ou non aromatique, et pouvant en outre comprendre des hétéroatomes tels que des halogènes, oxygène, azote, soufre, silicium ou phosphore.
chacun parmi R¹ et R³ représente indépendamment un groupe hydrocarboné monovalent, de préférence C₁-C₂₆-alkyle, C₇-C₂₆ alkylaryle ou C₇-C₂₆-aralkyle,
chacun parmi R² et R⁴ représente indépendamment un atome d'hydrogène, un groupe alcoxy, ou un groupe hydrocarboné monovalent, de préférence un atome d'hydrogène, C₁-C₆-alcoxy ou C₁-C₆-alkyle, et
chacun de p et q est indépendamment 1 ou 2, de préférence 1 et
n représente le nombre moyen de motifs répétitifs, le rapport molaire du motif structural (A) sur le motif structural (B) étant de 95:5 à 5:95.

2. Copolycarbonate amorphe selon la revendication 1, **caractérisé en ce que** l'au moins un motif aliphatique ou aromatique (B) est choisi dans le groupe des motifs structuraux de formule (3) à (10), dans lesquelles 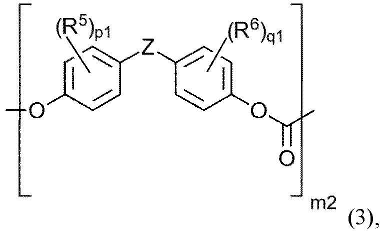
chaque Z représente indépendamment une simple liaison, - S(=O)₂-, -C(=O)-, -O-, -S-, -S(=O)-, -CH(CN)-, C₁-C₆-alkylène linéaire ou ramifié qui comprend éventuellement au moins un groupe carbonyle, comprend éventuellement au moins un atome d'halogène et/ou est éventuellement interrompu par au moins un hétéroatome, C₂-C₁₀-alkylidène qui comprend éventuellement au moins une double liaison carbone-carbone, comprend éventuellement au moins un groupe carbonyle et/ou comprend éventuellement au moins un atome d'halogène, C₅-C₁₂-cycloalkylène, dans lequel le groupe cycloaliphatique est condensé à au moins un autre cycle cycloaliphatique, C₅-C₁₅-cycloalkylidène, dans lequel le groupe cycloaliphatique est éventuellement condensé à au moins un cycle cycloaliphatique et/ou au moins un cycle aromatique, C₇-C₂₀-aralkylidène, C₈-C₂₀-aralkylène, C₆-C₁₂-arylène qui est éventuellement condensé à d'autres cycles aromatiques qui comprennent éventuellement au moins un hétéroatome, formule (B1-A), formule (B1-B), formule (B1-C) ou formule (B1-D) 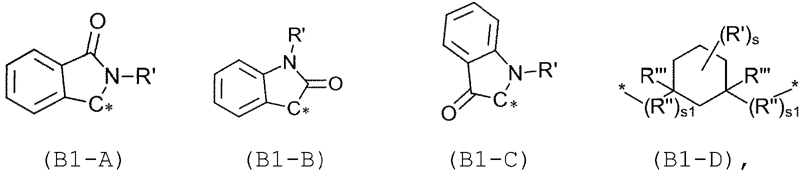 dans lesquelles dans les formules (B1-A), (B1-B) et (B1-C) chaque R' indépendamment représente un C₁-C₄-alkyle linéaire, C₃-C₄-alkyle ramifié, aralkyle ou aryle et le « C* » indique l'atome de carbone quaternaire qui est au niveau de la position indiquée comme « Z » dans la formule (3), et
dans lesquelles dans la formule (B1-D) chaque R' indépendamment représente un C₁-C₄-alkyle linéaire, C₃-C₄-alkyle ramifié, chaque R" indépendamment représente un C₁-C₄-alkylène, C₃-C₄-alkylène ramifié, chaque R‴ indépendamment représente H ou C₁-C₃-alkyle linéaire, s est 0 à 2 et chaque s1 indépendamment est 0 ou 1, et le « * » indique les liaisons qui lient « Z » aux cycles aromatiques dans la formule (3),
chaque R⁵ et R⁶ indépendamment représente H, C₁-C₁₈-alkyle, C₅-C₆-cycloalkyle, C₁-C₃-alcényl-, C₁-C₁₈-alcoxy, phénoxy, atome d'halogène, C₆-C₁₈-aryle ou C₇-C₁₈-aralkyle,
chacun parmi p1 et q1 est 1 à 4 et
m2 représente le nombre moyen de motifs répétitifs ; 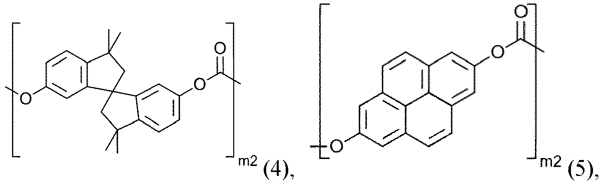 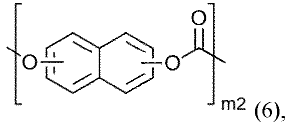
dans lesquelles dans la formule (4) à (6) m2 représentent le nombre moyen de motifs répétitifs ; 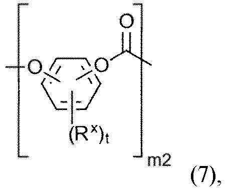
dans lesquelles chaque R^{x} indépendamment représente C₁-C₆-alkyle linéaire ou ramifié, C₁-C₁₂-aryle, C₁-C₈-aralkyle ou un atome d'halogène, t est 0 à 4 et m2 représente le nombre moyen de motifs répétitifs ; 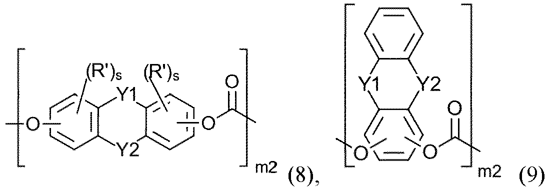
dans lesquelles dans la formule (8) et (9) chaque Y1 indépendamment représente oxygène, soufre ou N-R^{y}, dans lequel R^{y} est H ou -CH₃, chaque Y2 indépendamment représente une simple liaison, oxygène, soufre ou N-R^{y} comme défini ci-dessus et m2 représente le nombre moyen de motifs répétitifs et dans la formule (8) chaque R' indépendamment représente un C₁-C₄-alkyle linéaire, C₃-C₄ alkyle ramifié, aralkyle ou aryle et s est 0 à 2 ; 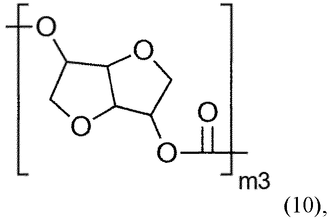
dans lesquelles m3 représente le nombre moyen de motifs répétitifs.

3. Copolycarbonate amorphe selon la revendication 1 ou 2, **caractérisé en ce que** le rapport molaire du motif structural (A) sur le motif structural (B) est de 75:25 à 8:92, de préférence de 71:29 à 9:91.

4. Copolycarbonate amorphe selon l'une quelconque des revendications 1 à 3, **caractérisé en ce que** dans un motif structural (A)
chaque X indépendamment représente un C₃-C₁₈-cycloalkylidène substitué ou non substitué ; un C₁-C₁₈-alkylidène de la formule -C(R^{c})(R^{d})-, dans laquelle R^{c} et R^{d} sont chacun indépendamment hydrogène, C₁-C₁₂-alkyle, C₁-C₁₂-cycloalkyle, C₇-C₁₂-arylalkyle, C₁-C₁₂-heteroalkyle, ou C₇-C₁₂-heteroarylalkyle cyclique ; ou un groupe de la formule -C(=R^{c})-, dans laquelle R^{c} est un groupe hydrocarboné divalent en C₁-C₁₂.

5. Copolycarbonate amorphe selon l'une quelconque des revendications 1 à 4, **caractérisé en ce que** le motif structural (A) est représenté par la formule (A1) 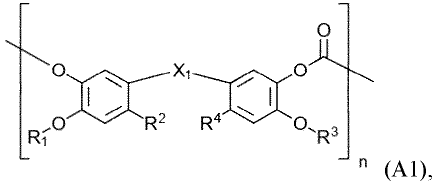
dans laquelle chaque X₁ indépendamment représente un C₁-C₁₀-alkylidène ou C₁-C₁₀-alkylène linéaire ou ramifié, préférablement un C₁-C₄-alkylène linéaire ou un C₁-C₆-alkylène ramifié,
chacun parmi R¹ et R³ indépendamment représente un C₁-C₂₆-alkyle, C₇-C₂₆ alkylaryle ou C₇-C₂₆-aralkyle, préférablement méthyle, éthyle, propyle, octyle, isooctyle, benzyle, éthylphényle, butlyphényle, propyldiphényle ou cyclohexylphényle,
chacun parmi R² et R⁴ indépendamment représente un atome d'hydrogène, C₁-C₆-alcoxy ou C₁-C₆-alkyle, préférablement un C₁-C₄-alkyle et
n représente le nombre moyen de motifs répétitifs.

6. Copolycarbonate amorphe selon la revendication 5, **caractérisé en ce que** dans la formule (A1)
chaque X₁ indépendamment représente un C₁-C₄-alkylidène linéaire ou un C₁-C₆-alkylène linéaire ou ramifié, chacun parmi R¹ et R³ indépendamment représente méthyle ou éthyle,
chacun parmi R² et R⁴ indépendamment représente un atome d'hydrogène, méthyle, éthyle ou propyle et n représente le nombre moyen de motifs répétitifs.

7. Copolycarbonate amorphe selon l'une quelconque des revendications 2 à 6, **caractérisé en ce que** l'au moins un motif aliphatique ou aromatique (B) est choisi dans le groupe des motifs structuraux de formule (3) ou (10), dans lequel les motifs structuraux de formule (3) sont représentés par au moins un motif structural choisi dans le groupe des motifs structuraux de formule (3a) à (3k) 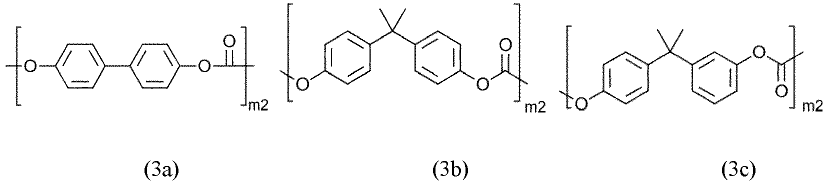 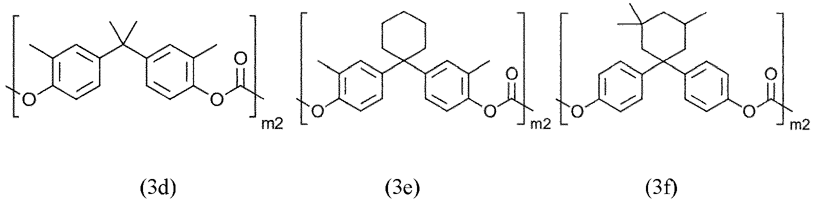 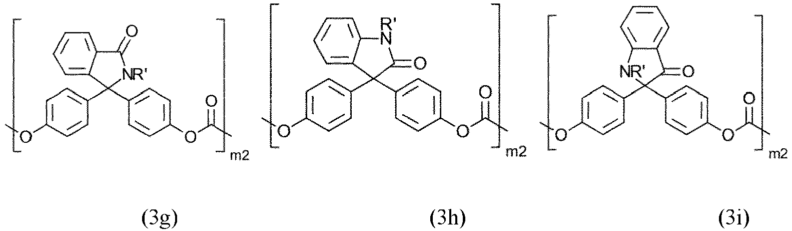 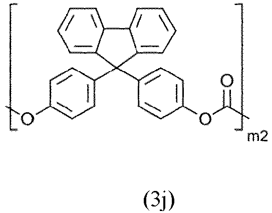 dans lesquelles dans les formules (3g), (3h) et (3i) R' représente méthyle ou phényle.

8. Composé de moulage comprenant le copolycarbonate amorphe selon l'une quelconque des revendications 1 à 7.

9. Article moulé comprenant le copolycarbonate amorphe selon l'une quelconque des revendications 1 à 7.

10. Article moulé selon la revendication 9, **caractérisé en ce que** l'article moulé est obtenu par extrusion ou moulage par injection.

11. Procédé pour la préparation d'un copolycarbonate amorphe, **caractérisé en ce que**
(I) 5 à 95 % en moles d'au moins un diol de formule (1) 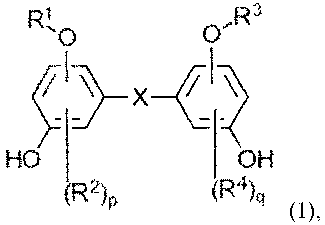 dans laquelle
chaque X représente indépendamment une simple liaison, - O-, -S-, -S(O)-, -S(O)₂-, -C(O)-, ou un groupe organique ayant 1 à 18 atomes de carbone, le groupe organique ayant 1 à 18 atomes de carbone pouvant être cyclique ou acyclique, aromatique ou non aromatique, et pouvant en outre comprendre des hétéroatomes tels que des halogènes, oxygène, azote, soufre, silicium ou phosphore,
chacun parmi R¹ et R³ indépendamment représente un groupe hydrocarboné monovalent et
chacun parmi R² et R⁴ indépendamment représente un atome d'hydrogène, un groupe alcoxy, ou un groupe hydrocarboné monovalent,
chacun parmi p et q indépendamment est 1 ou 2 et
(II) 95 à 5 % en moles d'au moins un diol aromatique ou aliphatique, les % en moles étant basés sur la somme de (I) et (II)
sont mis à réagir en fusion avec
(III) au moins un carbonate de diaryle de formule (2) 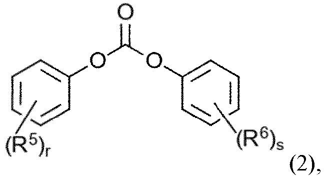
dans laquelle chaque R⁵ et R⁶ indépendamment représente H, C₁-C₃₄-alkyle, C₇-C₃₄-aralkyle, C₆-C₃₄-aryle ou -COO-R', dans lequel R' représente C₁-C₃₄-alkyle, C₇-C₃₄-aralkyle ou C₆-C₃₄-aryle et
chacun parmi r et s représente 1 à 5.

12. Procédé selon la revendication 11, **caractérisé en ce que** l'au moins un diol aromatique ou aliphatique (II) est choisi dans le groupe de motifs structuraux de formule (III) à (X) dans lesquelles 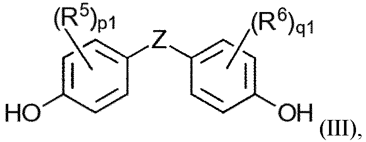 dans lesquelles dans la formule (III) chaque Z, R⁵, R⁶, p1 et q1 est tel que défini pour la formule (3) dans la revendication 2, 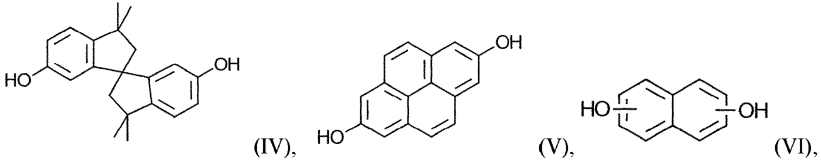 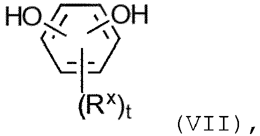 dans lesquelles dans la formule (VII) chaque R^{x} et chaque t est tel que défini pour la formule (7) dans la revendication 2, 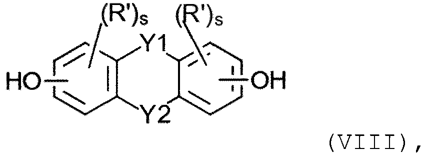 dans lesquelles dans la formule (VIII) chaque Y1, Y2, R' et s est tel que défini pour la formule (8) dans la revendication 2, 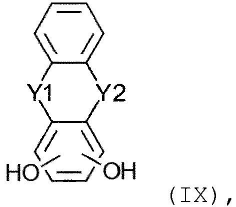 dans lesquelles dans la formule (IX) chaque Y1 et Y2 est tel que défini pour la formule (9) dans la revendication 2, et

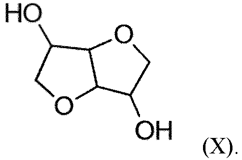

13. Procédé selon la revendication 12, **caractérisé en ce que** l'au moins un diol aromatique ou aliphatique (II) est le bisphénol A ou l'isosorbide.

14. Procédé selon l'une quelconque des revendications 11 à 13, **caractérisé en ce que** la réaction est effectuée en présence d'au moins un catalyseur qui est choisi dans le groupe constitué par les catalyseurs d'ammonium, un catalyseur de phosphonium et les bases organiques.

15. Procédé selon l'une quelconque des revendications 11 à 14, **caractérisé en ce que** (I) 75 à 8 % en moles et (II) 25 à 92 % en moles, de préférence (I) 71 à 9 % en moles et (II) 29 à 91 % en moles, par rapport à la somme de (I) et (II), sont utilisés.
